Europäisches Patentamt

European Patent Office

Office européen des brevets

(19)

(11) Veröffentlichungsnummer: **0 266 645 B1**

# (12) EUROPÄISCHE PATENTSCHRIFT

(45) Veröffentlichungstag der Patentschrift: **25.09.91**

(21) Anmeldenummer: **87115631.1**

(22) Anmeldetag: **24.10.87**

(51) Int. Cl.⁵: **B65G 25/04**, B65G 37/02, B41F 15/08

(54) **Vorrichtung zum schrittweisen Transportieren und Positionieren von Objekten.**

(30) Priorität: **05.11.86 DE 3637638**

(43) Veröffentlichungstag der Anmeldung:
**11.05.88 Patentblatt 88/19**

(45) Bekanntmachung des Hinweises auf die
Patenterteilung:
**25.09.91 Patentblatt 91/39**

(84) Benannte Vertragsstaaten:
**BE DE ES FR IT NL**

(56) Entgegenhaltungen:
**DD-A- 229 372**
**DE-A- 2 530 360**
**DE-B- 1 207 275**

(73) Patentinhaber: **Werner Kammann Maschinenfabrik GmbH.**
**Elsemühlenweg 83-89**
**W-4980 Bünde (Westf.)(DE)**

(72) Erfinder: **Tiemann, Gerhard**
**Breslauer Strasse 32**
**W-4972 Löhne 3(DE)**

(74) Vertreter: **Koepsell, Helmut, Dipl.-Ing.**
**Mittelstrasse 7**
**W-5000 Köln 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum schrittweisen Transportieren und Positionieren von Objekten gemäß dem Oberbegriff des Anspruches 1.

Bei einer derartigen durch die DE-A-25 30 360 bekannten Vorrichtung ist die Anordnung so getroffen, daß die Halterungseinrichtung zugleich auch als Transporteinrichtung dient, um die Objekte von Station zu Station vorzubewegen. D. h., daß die Halterungseinrichtung zwei Funktionen zu erfüllen hat, nämlich einmal das Halten der Objekte in den einzelnen Stationen, in denen im allgemeinen irgendwelche Behandlungen an den Objekten durchgeführt werden, sowie das Transportieren der Objekte von Station zu Station. Zwar weist die bekannte Vorrichtung zusätzlich eine Zwischenhalterung auf, die zwischen zwei benachbarten Stationen hin- und herbewegbar ist und dem Transport der Objekte dient. Die Hauptfunktion dieser Zwischenhalterung besteht jedoch darin, das von ihr getragene Objekt während des Transportschrittes um seine Längsachse zu verschwenken, um so die jeweils zu bedruckende Seite des Objektes in eine Position zu bringen, in welcher das Druckbild aufgebracht werden kann. Die Geschwindigkeit, mit welcher die Zwischenhalterung ihren Transportschritt ausführt, ist dabei abhängig von der Geschwindigkeit der in Transportrichtung erfolgenden Bewegung der Halterungseinrichtung.

Der Erfindung liegt die Aufgabe zugrunde, die Vorrichtung der einleitend beschriebenen Art zu verbessern, und zwar insbesondere dahingehend, daß die Durchsatzleistung erhöht werden kann, vor allem durch Erzielung eines schnelleren Transports. Darüber hinaus soll die Vorrichtung zum Dekorieren von Objekten unabhängig von deren Querschnittsform geeignet sein. D. h., es soll die Möglichkeit bestehen, die Vorrichtung und den Dekoriervorgang an die Querschnittsform der Objekte anzupassen, so daß die Vorrichtung bezüglich der Querschnittsform der Objekte ohne oder ohne ins Gewicht fallenden Einschränkungen einsetzbar ist. Beim Bedrucken von im Querschnitt etwa elliptischen Objekten, bei denen der Mittelpunkt, um welchen der Artikel während des Dekoriervorganges verschwenkt wird, nicht mit dem Mittelpunkt des Objektes zusammenfällt, soll gegenüber bekannten Vorrichtungen eine Vereinfachung derart möglich sein, daß die im Zusammenhang mit dem Dekoriervorgang erforderliche Lateralbewegung des Objektes kürzer wird, so daß insgesamt die Vorrichtung kürzer baut. Darüber hinaus soll es möglich sein, daß die Ebene, in welcher der Dekorationsvorgang stattfindet, also beispielsweise ein Etikett in Berührung mit der Mantelfläche des Objektes kommt oder das Sieb einer Siebdruckeinrichtung am Objekt anliegt, bezüglich ihrer Höhenlage nicht verändert zu werden braucht, um die Vorrichtung an die jeweiligen Gegebenheiten, insbesondere den Durchmesser der jeweils zu dekorierenden Objekte anzupassen. Vielmehr soll die notwendige vertikale Einstellung zwecks Anpassung an den jeweiligen Objektdurchmesser durch ensprechende Verstellung von Halterungseinrichtung und Transporteinrichtung möglich sein. Eine andere Zielsetzung besteht darin, im Bedarfsfall die einzelnen Objekte während der gesamten Dauer des Durchgangs durch die Vorrichtung so zu halten, daß die Objekte immer eine definierte und vorherbestimmbare Winkellage einnehmen und Änderungen dieser Winkellage im Zuge des Transports und der Behandlung in den einzelnen Stationen ebenfalls definierbar und vorherbestimmbar sind.

Diese Aufgabe wird mit den Mitteln gelöst, die im Kennzeichen des Anspruches 1 angegeben sind.

Im Vergleich mit der einleitend beschriebenen bekannten Vorrichtung ist somit für den Transport der Objekte eine besondere Transporteinrichtung vorgesehen, deren Geschwindigkeit nicht abhängig ist von der Geschwindigkeit, mit welcher irgendwelche Teile der Halterungseinrichtung bewegt werden. Selbstverständlich ist auch hierbei eine Abstimmung der Bewegungen von Halterungseinrichtung einerseits und Transporteinrichtung andererseits insofern erforderlich, als die einzelnen, die Objekte tragenden Halterungen nicht geöffnet werden können, bevor die Objekte für den nächsten Transportschritt von den jeweils zugeordneten Tragelementen übernommen worden sind. Umgekehrt gilt, daß das Tragelement das in einer Station befindliche Objekt erst freigeben kann, nachdem es von der dieser Station zugeordneten Halterung erfaßt worden ist. Zwischen diesen Wechseln der Objekte von der Halterungseinrichtung zur Transporteinrichtung und umgekehrt können beide Einrich tungen jedoch unabhängig voneinander bewegt und somit bezüglich Geschwindigkeit und Bewegungsablauf an die jeweils zu erfüllende Funktion angepaßt werden. Da der vom Objekt während eines Transportschritts zurückgelegte Weg das Ergebnis zweier Hübe, nämlich dem des Grundkörpers und dem des Tragelementes ist, können beide genannten Elemente einen Hub ausführen, der jeweils kürzer ist als der insgesamt vom Objekt während eines Transportschrittes zurückgelegte Weg. D. h., daß bei einer gegebenen Geschwindigkeit ein ruhigerer Lauf der Vorrichtung erzielt wird als bei der bekannten Vorrichtung, bei welcher die zugleich als Transporteinrichtung dienende Halterungseinrichtung einen Hub ausführen muß, der der Länge des Transportschrittes entspricht, um den das Objekt zwischen zwei Stationen bewegt wird.

Zwecks Anpassung der Transporteinrichtung an unterschiedliche Formen und Dimensionen der Objekte sowie unterschiedliche Längen in Umfangsrichtung der auf den Objekten anzubringenden Dekors ist eine Ausgestaltung vorteilhaft, bei welcher der vom Grundkörper und/oder vom Tragelement jeweils ausgeführte Hub verstellbar ist. Auf diese Weise kann vermieden werden, die Ebene, in der das Aufbringen des Dekors, also beispielsweise des Druckbildes oder des Etiketts, erfolgt, zwecks Anpassung an die jeweiligen Objekte in einer Ebene senkrecht zur Längsachse des in einer Halterung der Halterungseinrichtung befindlichen Objektes zu verstellen.

Gemäß einem weiteren Vorschlag der Erfindung kann dem Grundkörper der Transporteinrichtung wenigstens ein Steuerelement zugeordnet sein, das mit wenigstens einem der Tragelemente am Grundkörper verbunden ist und gegenüber dem Grundkörper verschoben werden kann und zum Steuern der Schwenkbewegungen der Tragelemente in Abhängigkeit von den Schwenkbewegungen des Grundkörpers dient.

Aufgrund der vom Tragelement während des Transportschritts ausgeführten Schwenkbewegung erfährt das von diesem Tragelement getragene Objekt eine entsprechende Verschwenkung, die zu einer Änderung der absoluten Winkellage des Objektes führt. Dies kann bei im Querschnitt etwa elliptischen oder ovalen Objekten dazu benutzt werden, durch entsprechende Wahl der Größe der vom Tragelement ausgeführten Schwenkbewegung das Objekt am Ende eines Transportschrittes in einer Position an die Halterung in einer Station zu übergeben, welche der Position des Objektes zu Beginn der diesem Transportschritt folgenden Behandlungsmaßnahme entspricht, während welcher das Objekt vom Haltemittel getragen wird. Entsprechend gilt, daß das Tragelement vor Beginn eines Transportschrittes das Objekt in einer Position aus der Halterung übernehmen kann, welche der Position des Objektes am Ende der diesem Transportschritt vorangegangenen Behandlungsmaßnahme entspricht, während welcher das Objekt vom Haltemittel getragen wird. Hier liegt ein besonderer Vorteil der Transporteinrichtung gemäß der Erfindung, da die bei der bekannten Vorrichtung erforderlichen zusätzlichen Maßnahmen entfallen, durch die das Objekt zwischen Beendigung des eigentlichen Transportschrittes und Beginn des Dekoriervorganges zunächst in die für den Dekoriervorgang erforderliche Ausgangsposition gebracht werden muß. Entsprechendes gilt für die zusätzliche Maßnahme nach Beendigung des Dekoriervorganges, durch welche das Objekt aus der Position am Ende des Dekoriervorganges in eine Winkelposition gebraht werden muß, in welcher es von der Transporteinrichtung für die Durchführung des folgenden Transportschrittes übernommen werden kann. Entsprechendes gilt für andere Behandlungsmaßnahmen, z. B. Beflammen oder Trocknen, bei denen das Objekt bestimmte Ausgangs- und Endpositionen einnimmt.

Als besonders zweckmäßig hat sich eine Ausführung herausgestellt, bei welcher der Grundkörper der Transporteinrichtung als Balken ausgebildet ist, an welchem die Haltemittel angebracht ist. Letzteres kann als Greifer ausgebildet sein, wobei die Notwendigkeit besteht, noch besondere Einrichtungen vorzusehen, durch welche dieser Greifer geöffnet und geschlossen werden kann. Die Ausführung des Haltemittels als Greifer hat den Vorteil, daß dabei in besonders einfacher Weise eine Gewähr dafür gegeben ist, daß die Objekte eine einmal, z. B. zu Beginn des Transports in der Vorrichtung, ihnen gegebene relative Winkellage beibehalten können, so daß es nicht mehr erforderlich ist, nach einer ersten Ausrichtung eines Objektes am Anfang des Transportweges im Zuge des weiteren Transportes noch zusätzliche Zwischen-Ausrichtungen vorzunehmen.

Es ist aber auch möglich, das Haltemittel als Vakuumhalter auszubilden. Dies macht es zwar erforderlich, jedes Haltemittel mit einer Leitung zu versehen, durch die die das Objekt aufnehmende Fläche des Vakuumhalters an eine Unterdruckquelle anschließbar ist. Andererseits entfallen dabei die Einrichtungen zum Öffnen und schließen des Greifers. Die Steuerung des Unterdrucks zum Ansaugen und Freigeben des Objektes ist mit einfachen Mitteln erreichbar, zumal bei Vorhandensein mehrerer derartiger Vakuumhalter im allgemeinen eine einzige gemeinsame Steuereinrichtung für sämtliche Vakuumhalter ausreichen wird.

Allerdings ist auch bei Verwendung eines Vakuumhalters ein Steuerelement erforderlich, welches die Schwenkbewegung des Vakuumhalters steuert. Als besonders zweckmäßig hat sich die Verwendung einer Leiste als Steuerelement herausgestellt. Dies gilt auch dann, wenn das Haltemittel als Greifer ausgebildet ist. Unabhängig von der Ausgestaltung der Haltemittel kann die Anordnung so getroffen sein, daß sämtliche durch die Steuerleiste zu steuernden Haltemittel an ihrer der Halterungseinrichtung abgekehrten Seite mit einem Fortsatz versehen sind, der schwenkbar mit der Leiste verbunden ist, die mit wenigstens einer Steuerstange verbunden ist, die schwenkbar und längsverschiebbar gelagert ist.

Bei Verwendung eines Greifers als Haltemittel ist dieser zweckmäßig mit einem die beiden Greiferbacken tragenden Stützkörper versehen, der am zugeordneten Grundkörper der Transporteinrichtung, also beispielsweise am vorerwähnten Balken, in einer zu dessen Bewegungsebene parallelen Ebene schwenkbar angebracht und mit seinem dem zu transportierenden Artikel abgekehrten Ende an der Steuerleiste dieser gegenüber schwenkbar angebracht und zwei miteinander kämmende Zahnräder trägt, von denen jeweils eines einer der beiden Greiferbacken zugeordnet ist, und ein zweiarmiger Hebel, der mit der eines der beiden Zahnräder tragenden Welle drehfest verbunden ist, mit einem Arm schwenkbar mit einer zweiten Steuerleiste und mit dem anderen Arm mit einer der beiden Greiferbacken verbunden ist und das zweite Zahnrad über einen Arm, der mit der das zweite Zahnrad tragenden Welle drehfest verbunden ist, mit der zweiten Greiferbacke schwenkbar verbunden ist. Dabei kann die Anordnung so getroffen sein, daß das den Greiferbacken abgekehrte Ende des gelenkig mit der zweiten Steuerleiste verbundenen Arms gabelartig ausgebildet und ein an der zweiten Steuerleiste angeordnetes Mitnehmerteil in die Gabel eingreift. Eine andere Möglichkeit besteht darin, das Ende dieses Arms mit einem Zahnsegment zu versehen, das mit einer Zahnstange kämmt, die die Funktion der zweiten Steuerleiste hat.

Als besonders zweckmäßig hat sich eine Ausführungsform herausgestellt, bei welcher der Grundkörper der Transporteinrichtung entlang einer kurvenförmigen Bahn hin-und herbewegt wird, deren Scheitelpunkt der am weitestens von der Ebene, in welcher die Halterungen angeordnet sind, entfernte Punkte der Bahn ist und die Schwenkbewegung der Tragelements an die Schwenkbewegung des Grundkörpers derart angepaßt ist, daß die Lageänderung des Tragelements senkrecht zur Ebene der Halterungen während der Schwenkbewegungen durch eine entgegengesetzte Lageänderung des Grundkörpers zumindest teilweise kompensiert wird. D. h., daß, wenn Grundkörper und Tragelement ihre Schwenkbewegungen in einer z.B. vertikalen Ebene ausführen und das Tragelement den Grundkörper nach oben überragt, die im Zuge der Schwenkbewegung des Tragkörpers nach oben erfolgende Verschiebung des von diesem getragenen Objektes kompensiert wird durch die gleichzeitig erfolgende Bewegung des Grundelementes in entgegengesetzter Richtung, also nach unten. Auf diese Weise kann erreicht werden, daß das Objekt einen Weg zwischen zwei Stationen beschreibt, der nur geringfügig vom linearen Verlauf abweicht. und zweckmäßig so gekrümmt ist, daß der Scheitelpunkt dieser Bahn der am weitesten von der Ebene, in welcher der Dekorationsvorgang erfolgt, entfernte Punkt der Bahn ist.

Die Halterungseinrichtung für die Objekte ist vorteilhaft in der Weise ausgebildet, daß sie zwei im wesentlichen parallel zu dem das Tragelement tragenden Grundkörper verlaufende Leisten aufweist, an deren einander zugekehrten Seiten die Halterungsteile angeordnet sind. Die Halterungsleisten können bei der vorerwähnten vertikalen Anordnung oberhalb des die Tragelemente tragenden Grundkörpers angeordnet sein. Es ist aber auch möglich, die Halterungsleisten seitlich neben den die Tragelemente tragenden Grundkörper anzuordnen. Dies wird im allgemeinen dann der Fall sein, wenn die zu dekorierenden Objekte stehend, also mit ihrer Längsachse vertikal verlaufend, durch die Vorrichtung hindurchtransportiert und dekoriert werden.

In der Zeichnung sind einige Ausführungsbeispiele der Erfindung dargestellt. Es zeigen:

Fig. 1a im Schema die Seitenansicht einer Vorrichtung zum Dekorieren von im Querschnitt annähernd elliptischen Objekten im Siebdruckverfahren, wobei die zusammenwirkende Teile die Position vor Beginn eines Transportschritts einnehmen,

Fig. 1b eine der Fig. 1a entsprechende Darstellung, die lediglich die Objekte in ihrer Position nach Beendigung eines Transportschritts zeigen,

Fig. 2 einen Schnitt nach der Linie II-II der Fig. 1;

Fig. 3a-c im Schem aufeinanderfolgende Position der zusammenwirkenden Teile im Zuge eines Transportschritts,

Fig. 4 einen Ausschnitt aus Fig. 1 in größerem Maßstab,

Fig. 5 die Seitenansicht eines Greifers in größerem Maßstab

Fig. 6 die dazugehörige Seitenansicht,

Fig. 7 einen Ausschnitt aus Fig. 2 in größerem Maßstab,

Fig. 8 einen Schnitt nach der Linie VIII-VIII der Fig. 7

Fig. 9 eine der Fig. 5 entsprechende Darstellung einer anderen Ausführrungsform eines Greifers,

Fig. 10 eine der Fig. 5 entsprechende Darstellung einer anderen Ausführrungsform eines Tragelementes,

Fig. 11 die grafische Darstellung der Bewegungsabläuf e der in einer Druckstation zusammenwirkenden Teile bei Objekten mit unterschiedlichen Querschnittsformen.

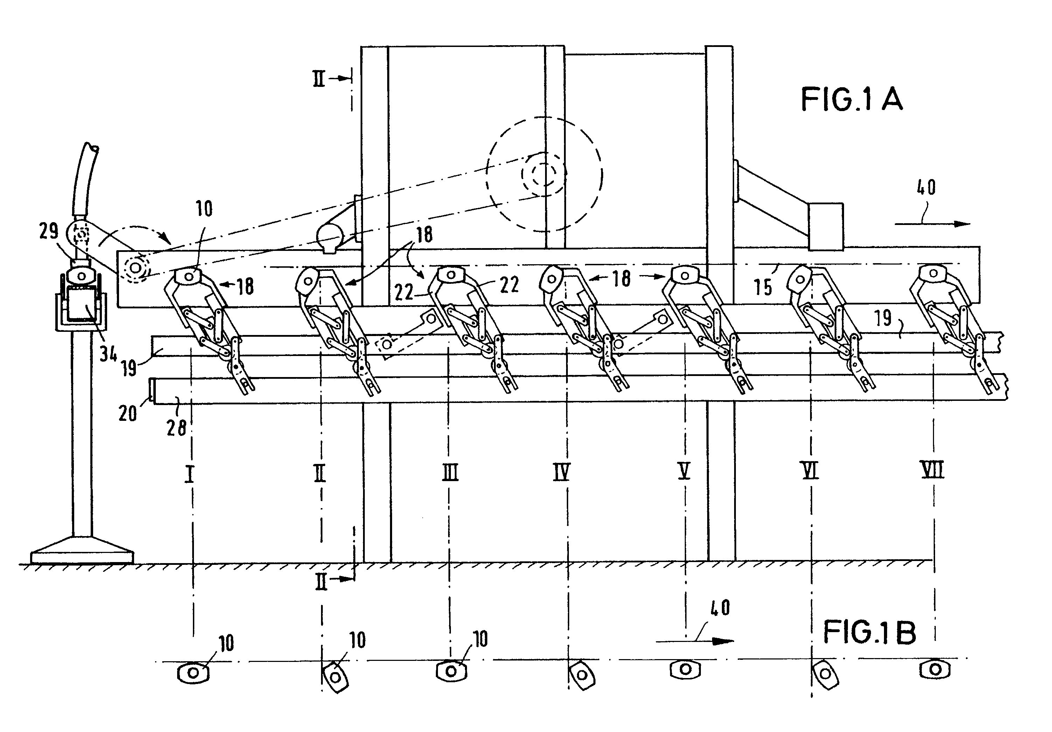

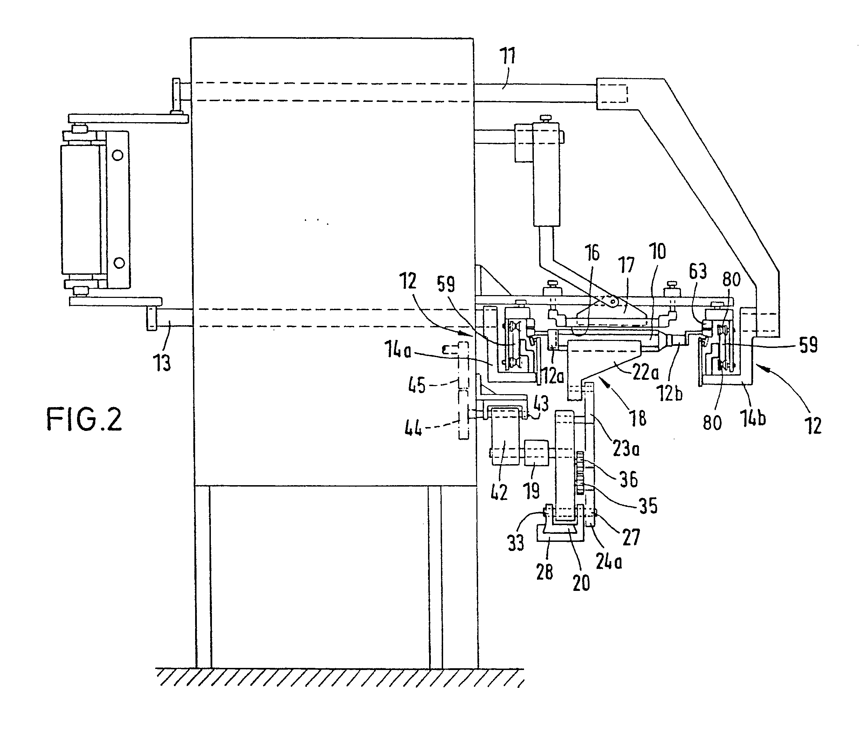

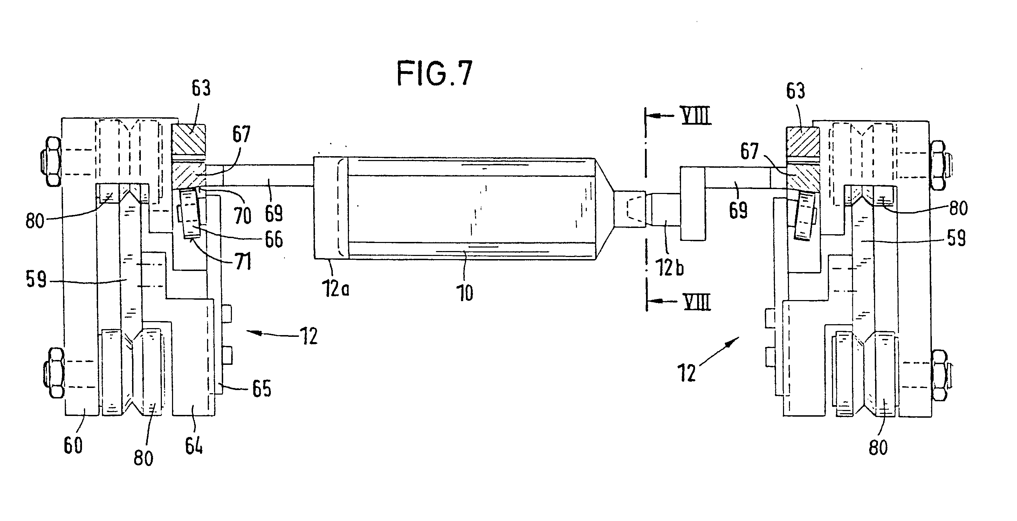

Bei dem in den Fig. 1 - 8 der Zeichnung dargestellten Ausführungsbeispiel handelt es sich bei den zu dekorierenden Objekten um Flaschen 10, die einen annähernd elliptischen Querschnitt aufweisen. Diese Flaschen werden in den Stationen, in welchen sie sich zwischen den Transportschritten befinden, von einer Halterungeinrichtung 12 getragen, welche mit mehreren paarweise angebrachten Halterungsteilen 12a, 12b versehen ist. Diese paarweise zusammenwirkenden Halterungsteile 12a, 12b sind in der bei Flaschen üblichen Weise so ausgebildet, daß das Halterungsteil 12a den bodenseitigen Endabschnitt des zu dekorierenden Objektes 10 aufnimmt, wohingegen das dornartig ausgebildete Halterungsteil 12b in die Halsöffnung der Flasche 10 eingeführt wird, so daß die Flasche 10, solange sie von der Halterungseinrichtung 12 getragen wird, zwischen den beiden Halterungsteilen 12a, 12b eingespannt ist. Sämtliche Halterungsteile 12a werden unter Zwischenschaltung weiterer, noch zu beschreibender Elemente von einer gemeinsamen, zumindest über mehrere Stationen sich erstreckende Leiste 14a getragen. Die Halterungsteile 12b werden in gleicher Weise von einer parallel zur Leiste 14a verlaufenden Leiste 14b getragen, die sich ebenfalls über mehrere Stationen der Vorrichtung erstreckt. Die beiden Leisten 14a, 14b sind quer zu ihrer Längserstreckung hin-und herverschiebbar angebracht, so daß sie in ihrerin den Fig. 2 und 7 dargestellten Endlage, in welcher sie den geringsten Abstand voneinander aufweisen, die in der Vorrichtung befindlichen Objekte 10 jeweils zwischen zwei zusammenwirkenden Halterungsteilen 12a und 12b, die gemeinsam eine Halterung bilden, einspannen. Die Halterungsteile 12a, 12b geben das Objekt 10 frei, wenn sie ihre zweite Endlage einnehmen, in welcher sie den größten Abstand voneinander aufweisen. Die beiden Leisten 14a, 14b werden über jeweils ein Gestänge 11 bzw. 13, das mit einem geeigneten Antrieb verbunden ist, zwischen beiden Endlagen hin- und herbewegt.

Da die Flaschen 10 liegend bedruckt werden, sind die Leisten 14a, 14b so angeordnet, daß sich die Halterungsteile 12a, 12b mit den von ihnen gehaltenen Flaschen 10 unterhalb der Ebene 15 befinden, in welcher sich die Siebdruckschablonen 16 befinden. In üblicher Weise ist jeder Siebdruckschablone 16 eine Rakel 17 zugeordnet.

Der Transport der Objekte 10 von Station zu Station erfolgt unabhängig von der Halterungseinrichtung 12 durch Tragelemente, die als Greifer 18 ausgebildet und unterhalb der Siebebene 15 angeordnet sind. Die Greifer 18 werden von einem als Balken ausgebildeten Grundkörper 19 getragen, der hin- und herbewegbar ist derart, daß er in einer zu seinem Längsverlauf parallelen vertikalen Ebene Schwenkbewegungen ausführt. Die Greifer 18 sind oberhalb des Balkens 19 schwenkbar derart an letzterem angebracht, daß sie in der Ebene, in welcher der Balken 19 seine hin-und hergehenden Schwenkbewegungen ausführt, ebenfalls zwischen zwei einen Abstand voneinander aufweisenden Endpositionen verschwenkt werden können. Die Steuerung der Schwenkbewegungen des Greifers erfolgt über eine erste Steuerleiste 20, die unterhalb des Balkens 19 zu diesem parallel verlaufend angeordnet ist.

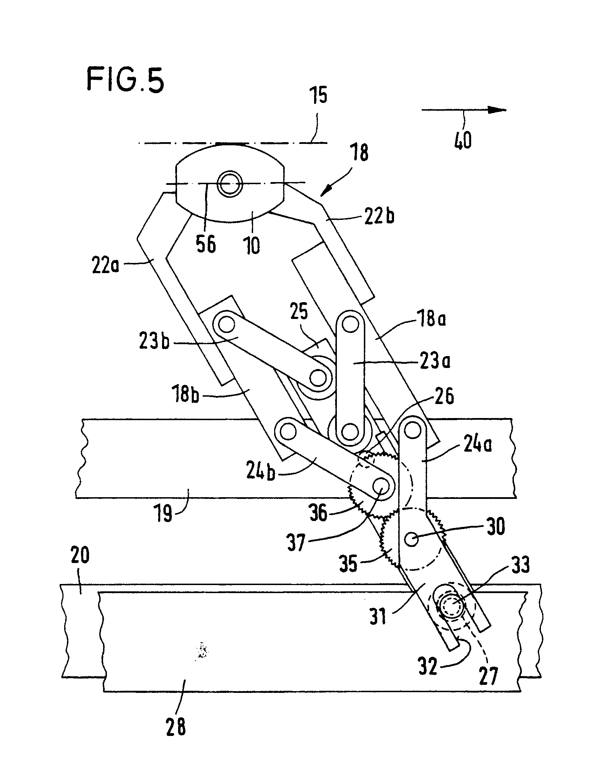

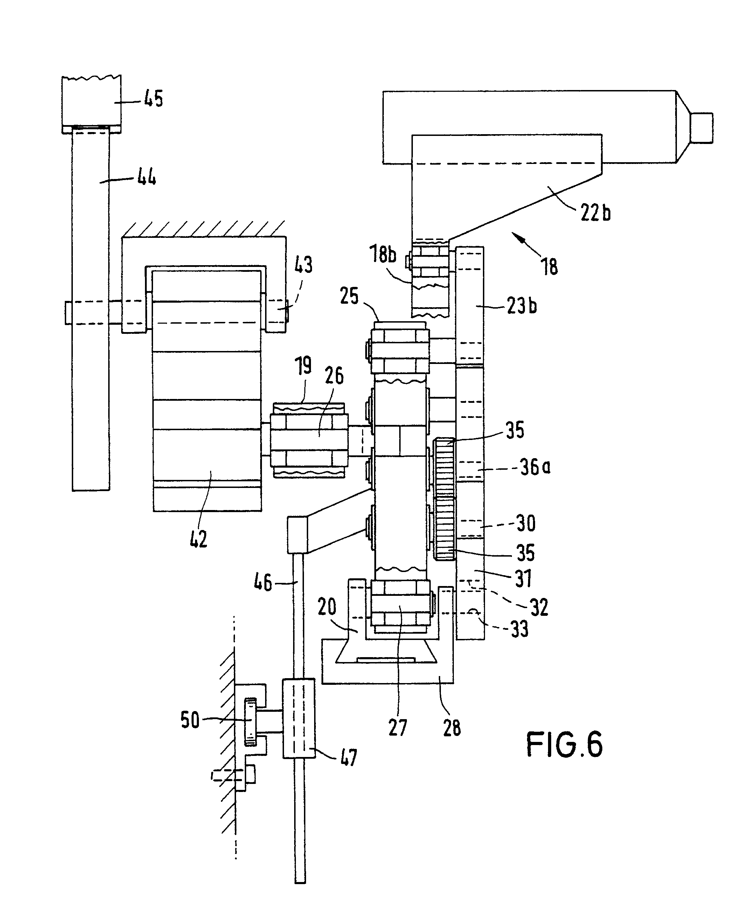

Jeder Greifer 18 ist mit zwei Greiferteilen 18a, 18b versehen, an denen auswechselbare Backen 22a, 22b angebracht sind (Fig. 5 und 6), die bezüglich ihrer Dimension, Form und relativen Positionen an Dimensionen, Form und relative Position des jeweils von ihnen gehaltenen Objektes angepaßt sind. Jeder der beiden Greiferteile 18a, 18b wird von zwei Parallel-Lenkern 23a, 24a bzw. 23b, 24b getragen, die einerseits schwenkbar mit dem jeweilige Greiferteil 18a bzw. 18b, andererseits schwenkbar mit einem gemeinsamen Grundkörper 25 verbunden sind, der seinerseits in der bereits erwähnten Weise schwenkbar am Balken 19 angebracht ist. Dies geschieht über einen im Balken 19 drehbar gelagerten Bolzen 26, der mit de m Grundkörper 25 des Greifers 18 fest verbunden ist.

An seinem den Greiferbacken 22a, 22b abgekehrten Ende ist der Grundkörper 25 jedes Greifers 18 mit der Steuerleiste 20 verbunden. Dies geschieht ebenfalls über einen mit der Steuerleiste 20 fest verbundenen Bolzen 27, der unter Zwischenschaltung von Lagern im Grundkörper 25 geführt ist, so daß letzterer gegenüber dem Bolzen 27 eine Schwenkbewegung ausführen kann.

Die Steuerleiste 20 ist innerhalb einer zweiten Steuerleiste 28 dieser gegenüber längsverschiebbar geführt. Die zweite Steuerleiste 28 hat die Funktion, die Greifer 18 zu öffnen und zu schließen. Zu diesem Zweck ist der Parallel-Lenker 24a, der über eine Welle 30 schwenkbar am Grundkörper 25 angebracht ist, mit einem Arm 31 versehen, dessen unteres, freies Ende als Gabel 32 ausgebildet ist. In die Gabel 32 greift ein Bolzen 33 ein, der fest an der zweiten Steuerleiste 28 angebracht ist. Eine Relativverschiebung der zweiten Steuerleiste 28 gegenüber dem Arm 31 des Parallel-Lenkers 24a hat somit eine Mitnahme des Arms 31 durch den Bolzen 33 und dadurch verursacht eine Schwenkbewegung des mit dem Arm 31 fest verbundenen Parallel-Lenkers 24a um die Achse der Welle 30 zur Folge. Auf der Welle 30 ist weiterhin ein Zahnrad 35 fest angebracht, welches mit einem zweiten Zahnrad 36 kämmt, das fest auf einer Welle 37a sitzt, die drehbar innerhalb des Grundkörpers 25 gelagert ist. Mit der Welle 37 ist das eine Ende des Parallel-Lenkers 24b verbunden. Mithin hat eine Drehbewegung der Welle 30, die durch eine Relativverschiebung zwischen Arm 31 und zweiter Steuerleiste 28 verursacht wird, über die Welle 30 eine Rotationsbewegung des Zahnrades 35 zur Folge, welches das Zahnrad 36 mitnimmt. Da die Rotationsbewegungen beider Zahnräder 35 und 36 gegenläufig sind, wird, während der Parallel-Lenker 24a im Uhrzeigersinn verschwenkt wird, der Parallel-Lenker 24b gleichzeitig und synchron in Gegenrichtung verschwenkt. Diese beiden Schwenkbewegungen haben zur Folge, daß die Greiferteile 18a, 18b auseinanderbewegt werden, so daß der Greifer 18 geöffnet wird. Die beiden anderen Parallel-Lenker 23a, 23b werden durch die über die angetriebenen Parallel-Lenker 24a, 24b bewirkte Bewegung der beiden Greiferteile 18a, 18b mitgenommen. Sie dienen lediglich dazu, die Parallelführung der beiden Greiferteile 18a, 18b zu gewährleisten.

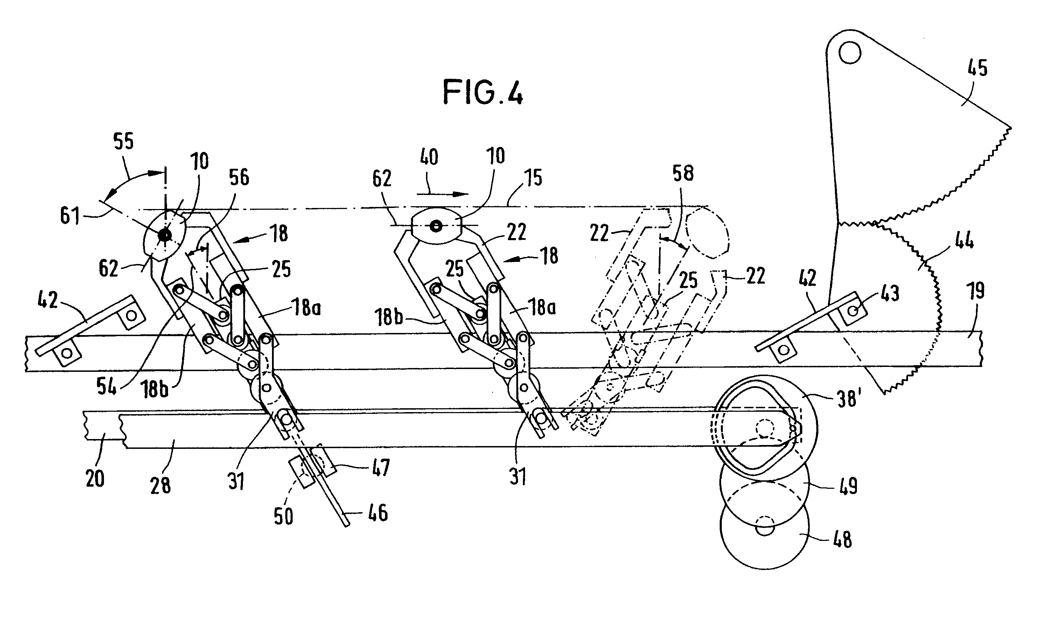

Der Balken 19 wird von zwei Lenkern 42 getragen, die bezüglich ihrer Länge einstellbar und dazu beispielsweise teleskopartig ausgebildet sind. Jeder der Lenker 42 ist mit seinem einen Ende schwenkbar mit dem Balken 19 und mit seinem jeweils anderen Ende mit einer Welle 43 verbunden, auf der ein Zahnsegment 44 fest angebracht ist, das durch ein weiteres Zahnsegment 45 angetrieben wird (Fig. 4). Den beiden Zahnsegmenten 45 beider Lenker 42 ist ein gemeinsamer Antrieb zugeordnet. Aus Gründen der Übersichtlichkeit sind die Zahnsegemente des linken Lenkers 42 sowie der Antrieb in der Zeichnung nicht dargestellt ist. Durch Einstellung der Länge der Lenker 42 können Höhenlage und Hub des Balkens 19 den jeweiligen Erfordernissen angepaßt werden.

Die Steuerleiste 20 wird über die Bolzen 27 sämtlicher Grundkörper 25 der Greifer 18 von diesen Grundkörpern getragen. Mithin nehmen Steuerleiste 20 und die von ihr getragene zweite Steuerleiste 28 an der Schwenkbewegung des Balkens 19 synchron teil, wenn keine besonderen Vorkehrungen getroffen werden. Um die für die Schwenkbewegung der Greifer 18 erforderliche Relativbewegung zwischen Balken 19 und erster Steuerleiste 20 zu bewirken, ist am Grundkörper 25 wenigstens eines der Greifer 18 eine Steuerstange 46 fest angebracht, deren dem Greiferkörper 25 abgekehrter Endbereich in einer eine axiale Verschiebung der Steuerstange 46 ermöglichenden, als Gleitlager 47 ausgebildeten Führung geführt ist, die mit einer Achse 50 verbunden ist (Fig. 6). Letztere ist am Maschinenrahmen höhenverstellbar gelagert. Diese Anordnung hat zur Folge, daß bei einer Schwenkbewegung des Balkens 19 der Greiferkörper 25 und damit der Greifer 18 um den Bolzen 26 eine Schwenkbewegung ausführen, da der Greiferkörper 25 in einem Abstand von der Längsachse des ihn tragenden Bolzens 26 über die Steuerstange 46 im Gleitlager 47 geführt wird. Das Ausmaß dieser Schwenkbewegung hängt ab von der Position des Gleitlagers 47, das bezüglich seiner Höhenlage so zu positionieren ist, daß bei einem bestimmten Hub des Balkens 19 der Greifer 18 die gewünschte Schwenkbewegung ausführt. Da der in Fig. 4 dargestellte, mit der Steuerstange 46 verbundene Zangenkörper 25 seinerseits schwenkbar, jedoch nicht verschiebbar mit der ersten Steuerstange 20 verbunden ist, wird die vom Zangenkörper 25 ausgeführte Schwenkbewegung zwangsläufig auf die erste Steuerleiste 20 und von dieser auf alle anderen mit ihr verbundenen Greifer 18 übertragen. Auf diese Weise werden synchrone Schwenkbewegungen relativ zum Balken 19 aller von diesem getragenen und mit der ersten Steuerleiste 20 verbundenen Greifer erreicht. Das gleiche Ergebnis kann auch dadurch erreicht werden, daß die Steuerstange 46 unmitelbar mit der Steuerleiste 20 verbunden ist.

Außerdem wird über eine Kurvenscheibe 38 eine Längsverschiebung der zweiten Steuerleiste 28 gegenüber der diese tragenden ersten Steuerleiste 20 bewirkt. Die dadurch verursachte Relativbewegung zwischen beiden Steuerleisten 20 und 28 bewirkt das Öffnen und Schließen des Greifers 18.

Die Öffnungs- und Schließbewegungen sämtlicher durch die zweite Steuerleiste 28 betätigter Greifer erfolgen ebenfalls synchron. Die die Relativverschiebung der zweiten Steuerleiste 28 gegenüber der ersten Steuerleiste 20 bewirkende Kurvenscheibe 38 wird über eine Wellenversatzkupplung 48, 49 angetrieben, die es ermöglicht, daß der Abstand zwischen Kurvenscheibe 38 und Antriebsrad 48 der Wellenversatzkupplung sich in Abhängigkeit von den Schwenkbewegungen der beiden Steuerleisten 20, 28 ändert.

Der Balken 19 trägt mehrere Greifer 18, die in Längsrichtung des Balkens 19 in gleichen Abständen voneinander angebracht sind. Die Abstände der Greifer voneinander entsprechen den Abständen der einzelnen Stationen, in denen die Objekte von der Halterungseinrichtung 12 getragen werden. Die Anzahl der Greifer 18 und somit die Länge des Balkens 19 und der beiden Steuerleisten 20 und 28 hängen somit ab von der Anzahl der Stationen, durch die die Objekte 10 im Verlauf ihrer Behandlung in der Siebdruckmaschine durch die Greifer 18 hindurchbewegt werden.

Die einzelnen Arbeitsschritte laufen dabei folgendermaßen ab:

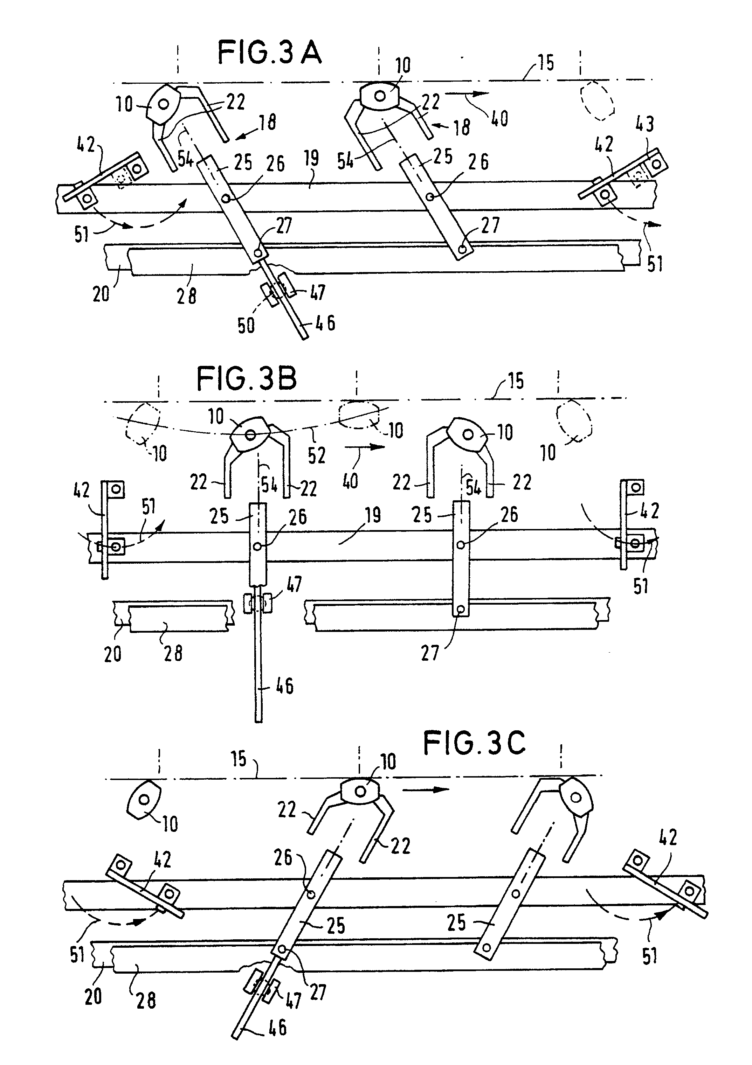

Das zu bedruckende Objekt wird zunächst von einem Fördermittel 34, welches das Objekt in die Nähe der Vorrichtung gebracht hat, durch eine besondere Transporteinrichtung 29, bei der es sich um Vakuumelement handeln kann, zwischen die beiden in Transportrichtung ersten Halterungsteile 12a, 12b der Halterungseinrichtung 12 gebracht. Die beiden Halterungsleisten 14a, 14b weisen dabei ihren größten Abstand voneinander auf. Danach werden die beiden Halterungsleisten 14a, 14b in ihre Schließposition verschoben, in welcher das Halterungsteil 12a mit dem Boden und das Halterungsteil 12b mit dem Flaschenhals des Objektes in Eingriff kommt. Danach kann in dieser ersten Station eine Behandlung an dem Objekt durchgeführt werden. Es ist z. B. möglich, seine Lage zu prüfen und es in bestimmter Weise in Umfangsrichtung auszurichten, damit es für die folgenden Behandlungsvorgänge die richtige Position einnimmt. Dabei werden in sämtlichen anderen Stationen der Vorrichtung ebenfalls Objekte, die bereits vorher in die Vorrichtung eingegeben worden waren, von den dort jeweils befindlichen Halterungsteilen 12a und 12b gehalten. Am Ende des Behandlungsschritts, dessen Dauer von der Station bzw. den Stationen mit der längsten Behandlung abhängt, werden die Objekte von jeweils einem der Greifer 18 erfaßt, deren Anzahl im allgemeinen der Anzahl der aus Halterungsteilen 12a und 12b bestehenden Halterungen entspricht. Unter der Voraussetzung, daß die Objekte in der Vorrichtung in Richtung des Pfei les 40 transportiert werden, nehmen die Greifer 18 beim Erfassen der Objekte 10 die in den Fig.1A, 3A und 4(ausgezogen) dargestellte Endlage ein, in welcher sie entgegen der Transportrichtung 40, also nach links, verschwenkt sind. Durch entsprechendes Verschieben der zweiten Steuerleiste 28 gegenüber der ersten Steuerleiste 20 werden sämtliche Greifer geschlossen, wobei jeder Greifer das in der Station, der er in seiner Aufnahmeposition zugeordnet ist, befindliche Objekt 10 erfaßt, wie dies in den Fig. 1, 3A und 4-(ausgezogen) dargestellt ist. Danach werden sämtliche von den Halterungsteilen 12a, 12b gebildeten Halterungen durch Auseinanderfahren der beiden Halterungsleisten 14a, 14b geöffnet, so daß nunmehr jedes Objekt ausschließlich von dem Greifer 18 getragen wird, der es zuvor erfaßt hatte. Nach dem Öffnen der Halterung führen Balken 19 und die aus den beiden Leisten 20 und 28 bestehende Steuereinheit durch entsprechendes Verschwenken der Lenker 42 eine Schwenkbewegung aus, deren horizontale Komponente in Förderrichtung 40 weist. Im Zuge der durch die Pfeile 51 angedeuteten Schwenkbewegung erfährt der Balken 19 zunächst eine Absenkung, bis er auf halbem Wege den Scheitelpunkt (Fig. 3B) erreicht hat. Danach weist die Schwenkbewegung des Balkens 19 eine nach oben gerichtete Komponente auf, so daß der Balken 19 am Ende des Hubes (Fig. 3C) wieder die Höhenlage erreicht hat, in welcher er sich am Beginn des Transporthubes befand. Während dieses durch die Schwenkbewegung bewirkten Transporthubes des Balkens 19 erfährt die aus den Steuerleisten 20, 28 bestehende Einheit aufgrund des vorbeschriebenen Zusammenwirkens von Steuerstange 46 und Gleitlager 47 eine Relativverschiebung gegenüber dem Balken 19 parallel zu dessen Längserstreckung derart, daß jeder der Greifer gegenüber dem ihn tragenden Balken 19 um die Achse des Bolzens 26 ebenfalls nach rechts in die Lage gemäß Fig. 3C und Fig. 4 (strichpunktiert) verschwenkt wird, so daß jeder Greifer 18 im Ergebnis in Transportrichtung 40 um eine horizontale Distanz vorbewegt worden ist, deren Länge dem Winkel der Schwenkbewegung und dem Abstand zwischen Drehpunkt, d. h., Achse des Bolzens 26, und dem das jeweilige Objekt haltenden Ende der beiden Greiferbacken 22a, 22b entspricht. Somit laufen beim Vortransport der Objekte 20 in Richtung des Pfeiles 40 gleichzeitig zwei Bewegungen ab, die einander überlagern: Einmal addieren sich die beiden horizontalen Bewegungskomponenten von Balken 19 und Greifer 18 in Richtung des Pfeiles 40, so daß der von den Greiferbacken 22a, 22b und damit auch der von den von diesen gehaltenen Objekten 10 jeweils zurückgelegte Weg der Summe der beiden Bewegungskomponenten entspricht. Zum anderen enthält die von den Greiferbacken 22a, 22b und somit auch von dem von diesen Backen gehaltenen Objekt 10 ausgeführte Schwenkbewegung eine vertikale Bewegungskomponente, die in der ersten Weghälfte gegenüber dem Balken 19 nach oben gerichtet ist und somit die in dieser ersten Weghälfte gegebene Abwärtsbewegung des Balkens 19, soweit es das Objekt 10 betrifft, weitgehend kompensiert, so daß das Objekt 10 eine aus den Bewegungen von Balken 19 und ihn tragendem Greifer 18 resultierenden Weg 52 (Fig. 3B) zwischen zwei Stationen beschreibt, welcher nahezu horizontal sein kann, jedenfalls wesentlich weniger gekrümmt verläuft als die von Balken 19 und Greifer 18 beschriebenen Wege, jeweils für sich gesehen, verlaufen.

Die vorbeschriebene Arbeitsweise erlaubt es, die den Transport der Objekte 10 bewirkenden Maschinenteile, nämlich Balken 19 und Greifer 18, jeweils einen merklich kürzeren Hub ausführen zu lassen als dem Transportweg entspricht, um den jedes Objekt 10 zwischen zwei Stationen bewegt werden muß. Die nach unten gerichtete Schwenkbewegung des Balkens 19 ermöglicht es, die vorbeschriebene Schwenkbewegung des Greifers mit einer nach oben gerichteten Bewegungskomponente durchzuführen, ohne daß im Zuge des Transportsschritts das Objekt eine Höhenlage einnimmt, die über der Ebene 15 liegt, in welcher die Dekoration aufgetrage n wird. Um letzteres zu erreichen, bedarf es keiner besonderen Maßnahme. Es ist lediglich erforderlich, die Hubbewegungen oder, besser gesagt, die vertikalen Komponenten der Hubbewegungen von Balken 19 und Greifer 18 entsprechend aufeinander abzustimmen.

Sobald die Greifer 18 bei Beendigung des Transportschrittes in ihrer rechten Endposition (Fig. 3C), d. h. in der Station angekommen sind, in die das Objekt zu transportieren ist, werden die beiden Halterungsleisten 14a, 14b wieder zusammengefahren mit dem Ergebnis, daß die Halterungsteile 12a, 12b jeder Station mit dem dort jeweils befindlichen Objekt 10 in Eingriff kommen. Danach können die Greifer durch entsprechendes Verschieben der zweiten Steuerleiste 28 geöffnet und danach wieder in die linke Ausgangslage zurückbewegt werden, um dort nach Beendigung des zumindest an der Mehrzahl der Objekte durchzuführende Behandlungsschrittes wiederum die Objekte zu erfassen, um den nächsten Transportschritt durchzuführen. Diese Rückbewegung in die Ausgangslage (Fig. 1 und 3A) erfolgt durch Verschwenken des Balkens 19 und der Greifer 18 entgegen Pfeilrichtung 51 bzw. 53, wobei die Greifer geöffnet bleiben können.

Bei der vorbeschriebenen Betriebsweise, bei welcher die Greifer 18 eine Schwenkbewegung gegenüber dem sie tragenden Balken 19 ausführen, erfährt im Zuge dieser Schwenkbewegung auch das vom jeweiligen Greifer 18 getragene Objekt 10 eine Verschwenkung um seine Längsachse, die parallel zur Schwenkachse des Greifers verläuft. Wenn unterstellt wird, daß in der Ausgangslage des Greifers (Fig. 3A, 4) , in welcher er das jeweilige Objekt erfaßt, der Greifer 18 gegenüber der Vertikalen um 30° nach links geneigt ist, so daß seine Mittenachse 54 mit der Vertikalen einen Winkel 56 von 30° einschließt und der Greifer am Ende seiner Bewegung die in den Fig.3C und 4 rechts strichpunktiert dargestellte Endlage einnimmt, in welcher seine Mittenachse 54 einen Winkel 58 von wiederum 30° mit der Vertikalen einschließt, hat der Greifer gegenüber dem Balken 19 eine Bewegung im Bogenmaß von 60° ausgeführt. Wenn das zu transportierende und zu dekorierende Objekt 10 gemäß den Darstellungen in den Fig. 3A und 4 zu Beginn des Transporthubes eine Ausgangslage einnimmt, in welcher die kürzere Aohse 61 seines etwa elliptischen Querschnitts einen Winkel von 60° mit der Vertikalen einschließt, verläuft seine längere Querschnittsachse 62 am Ende des Transporthubes horizontal. Beim nächsten, durch den folgende Greifer 18 ausgeführten Transporthub erfährt das Objekt 10 erneut eine Verschwenkung um seine Längsachse von 60°, so daß es dann die rechts in Fig. 3C und rechts in Fig.4 strichpunktiert dargestellte Lage einnimmt. Voraussetzung dafür ist, daß die Greiferbacken 22a, 22b, die unmittelbar am Objekt 10 angreifen, der jeweiligen Position des Objektes in dessen Umfangsrichtung entsprechend ausgebildet und angeordnet sind. Die Zeichnung läßt erkennen, daß die Greiferbacken 22a, 22b der einzelnen Greifer unterschiedlich ausgebildet und angeordnet sind in Ahängigkeit von der Winkelstellung des Objektes. In jeder Position des Greifers liegt der Abwicklungsmittelpunkt der zu dekorierende Fläche in der Mittelebene des Greifers. In der Position des Objekts, in welcher seine längere Achse 62 horizontal verläuft, liegen Abwicklungsmittelpunkt und Mittelpunkt des Objektes 10 in derselben, nämlich der vertikalen Ebene.

Die vorbeschriebene Verschwenkung des Objektes 10 um eine zur Schwenkachse des Greifers 18 parallele Achse kann insbesondere beim Bedrucken von im Querschnitt unrund, insbesondere etwa elliptisch oder oval ausgebildeten Objekten 10, dazu benutzt werden, den Bewegungsablauf des Objektes 10 beim eigentliche Dekoriervorgang merklich zu vereinfachen und zu verkürzen.

Bei bekannten Verfahren und Vorrichtungen wird ein derartiges zu dekorierendes Objekt im allgemeinen in einer Position an die Behandlungsstation herantransportiert, in welcher seine längere Achse parallel zur Transportrichtung verläuft. Da das eine solche Querschni ttsform aufweisende Objekt in Abhängigkeit von seiner Querschnittsform und der Länge des zu dekorierenden Bereiches in Umfangsrichtung zunächst in eine bestimmte Winkelstellung gebracht werden muß, von der ausgehend der Dekorationsvorgang, also beispielsweise das Bedrucken oder das Aufbringen eines Etiketts, beginnen kann, besteht bei bekannten Verfahren und Vorrichtungen die Notwendigkeit, nach Beendigung des Transporthubes in der eigentliche Behandlungsstation noch einen besonderen Transportschritt vorzusehen, der lediglich dazu dient, das zu dekorierende Objekt aus seiner Lage am Ende des Transportschrittes in die für den Dekorationsvorgang notwendige Anfangslage zu bringen. Unter Verwendung der in den Figuren 1A und 1B dargestellten Positionen der Objektein den Stationen I - VII würde dies beispielsweise bedeuten, daß das Objekt aus der Station I, in welcher seine längere Querschnittsachse 62 (Fig. 4) horizonal verläuft unter Beibehaltung dieser Winkelposition in die Station 2 gelangt, in welcher eine Behandlungs stattfinden soll, während welcher das Objekt eine Verschwenkung um seine Abwicklungsmittelpunkt erfährt. Da diese Verschwenkung nicht in einer Winkelposition beginnen kann, in welcher seine längere Querschnittsachse parallel zur Transportrichtung, also im konkreten Fall horizontal verläuft, ist es erforderlich, das Objekt in dem erwähnten besonderen Schritt in die erforderliche Ausgangslage für den folgenden Behandlungsvorgang zu bringe. Diese Ausgangslage soll die Position sein, die das Objekt in Station II in Fig. 1B einnimmt. Entsprechendes gilt für die Handhabung des Objektes am Ende des Behandlungsvorganges. Die Winkelposition des Objektes am Ende des Behandlungsvorganges ergibt sich - wie die Anfangsposition - im wesentlichen aus der Querschnittsform des Objektes, Länge und Anordnung der Dekoration auf der zu dekorierenden Fläche und dem Verlauf der zu dekorierenden Fläche. In vielen Fällen wird das Objekt am Ende des Behandlungsvorganges eine Position einnehmen, die der Ausgangsposition in spiegelverkehrter Anordnung entspricht. D. h., daß auch vor dem an die Behandlung anschließenden Transportschritt bei bekannten Vorrichtungen im allgemeinen wiederum eine besonderere Maßnahme erforderlich ist, durch die das Objekt in eine für den folgenden Transportschritt geeignete Position gebracht wird.

Die Erfindung vermeidet diese Probleme, da aufgrund der von den Zangen ausgeführten Schwenkbewegungen es ohne weiteres möglich ist, diese Schwenkbewegung in Abhängigkeit von den jeweiligen Gegebenheiten so auszuführen, daß beispielsweise am Ende des Transportschrittes das Objekt 10 bereits die für den Beginn des folgenden Behandlungsvorganges notwendige Position, beispielsweise jene in Fig. 4 gestrichelt dargestellte Position einnimmt. Es ist dann lediglich erforderlich, den Winkel, um welchen der Greifer 18 verschwenkt wird, dem Anstellwinkel des Objektes zu Beginn des Behandlungsvorganges anzupassen und auch die Greiferbacken entsprechend auszubilden und anzuordnen. Entsprechendes gilt für den Weitertransport nach Beendigung des Behandlungsvorganges. Der folgende Greifer kann das Objekt erfassen und übernehmen, wenn es noch seine Endlage nach Beendigung desBehandlungsvorganges einnimmt und dann unmittelbar darananschließend den folgenden Transportschritt durchführen.

Der vorbeschriebene Bewegungsablauf wird im folgenden anhand der Fig. 1A und 1B erläutert:

Das Objekt 10, das in der Station I eine Position einnimmt, in welcher seine längere Achse 56 parallel verläuft, wird durch den in Transportrichtung 40 erste Greifer 18, der dazu seine linke Endlage einnimmt, erfaßt und in die Station II transportiert. Im Zuge des dabei stattfindenden Schwenkvorganges wird das Objekt 10 in die in Station II der Fig. 1B dargestellte Position gebracht, die der strichpunktiert dargestellten Position rechts in Fig. 4 entspricht. In der Station II soll am Objekt 10 eine Behandlung durchgeführt werden, in deren Verlauf das Objekt eine Verschwenkung um seinen Abwikkelmitte lpunkt erfährt, der außerhalb des Querschnitts des Objektes liegt. Bei dieser Behandlung kann es sich um eine für die Bedruckung vorbereitende Maßnahme, beispielsweise um eine Beflammung handeln. Dabei erfährt das Objekt im Zuge der Verschwenkung auch eine Lateralverschiebung, so daß es nach Beendigung des Behandlungsschrittes die in Fig. 1B in der Station II dargestellte Lage einnimmt. Im Zuge des folgenden Transportschrittes erfolgt wiederum eine Verschwenkung des Objektes, so daß es am Ende des Transportschrittes die in den Fig. 1A und 1B dargestellte Winkelposition einnimmt, bei welcher - analog Station I - die längere Achse wiederum horizontal verläuft. Die Fig. 1A und 1B lassen erkennen, daß mit jedem Transportschritt eine Verschwenkung erfolgt, die im Bedarfsfall dazu verwendet werden kann, das Objekt im Zuge des Tansporschrittes ohne besondere Maßnahmen in eine Position zu bringen, in welcher die nach dem Transportschritt durchzuführende Behandlung unmittelbar beginnen kann. Beim Transportschritt von der Station I in der Station II wurde das Objekt in die in Fig. 1B in der Station 2 dargestellte Position gebracht, die dem Anstellungswinkel entspricht, in welcher der Behandlungsvorgang, beispielsweise auch der Bedruckungsvorgang beginnt. Am Ende dieses Vorganges nimmt das Objekt die in Fig. 1A in der Station II dargestellte Winkellage ein, in der es bei entsprechender Anordnung und Ausgestaltung der Greiferbacken des das Objekt in der Station II übernehmenden Greifers in dieser Position vom Greifer übernommen werden kann, um sofort, d. h. ohne zusätzliche Maßnahmen, in die folgende Station III gebracht zu werden, in welcher z. B. eine Behandlung durchgeführt werden kann, in der ein Verschwenken des Objektes nicht erforderlich ist. Beim Transport aus der Station III in die Station IV, in der beispielsweise der Druckvorgag stattfinden soll, erfährt das Objekt wiederum im Zuge des Transportschrittes eine Verschwenkung, die es in die Ausgangsposition für den Druckvorgang bringt, der in Fig. 1B in der Station IV dargestellt ist. Während des Druckvorganges erfährt das Objekt eine Verschwenkung in die Position gemäß Fig. 1A, Station IV, aus der es, wiederum ohne zusätzliche Maßnahmen oder Schritte, direkt im Zuge des nächsten Transportschrittes in die Station V gebracht werden kann.

Beim Bedrucken von im Querschnitt kreisrunden Artikeln spielen die vorerwähnten Möglichkeiten keine wesentliche Rolle, da eine Ausrichtung der zu dekorierenden Umfangsfläche zum Mittel für das Auftragen des Dekors, also beispielsweise zum Etikettenträger oder zur Druckschablone, durch einfache Rotation des Objektes um seine Längsachse innerhalb der Halterunsteile 12a, 12b erfolgen kann.

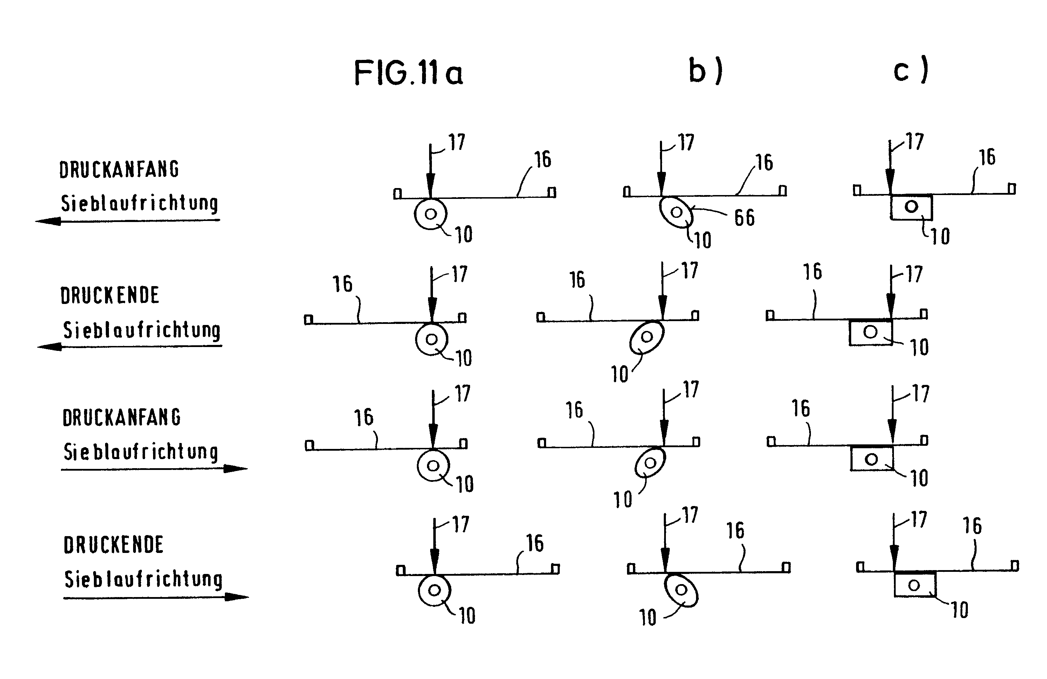

Fig. 11 der Zeichnung läßt die Bewegungsabläufe bei Runddruck, Ovaldruck und Flachdruck erkennen. In allen drei Fällen ist die Rakel 17 stationär angeordnet. Die Siebdruckschablone 16 ist gegenüber der Rakel verschiebbar. Im Falle a) des Bedruckens von im Querschnitt kreisförmigen Objekten 10, erfährt das Objekt keine Lateralverschiebung. Es wird lediglich das Sieb verschoben.

Im Falle b) des Bedruckens von im Querschnitt etwa elliptischen Objekten 10 nimmt das Objekt am Druckanfang die oben dargestellte Position ein, die der Position in den Stationen II und IV in Fig. 1B entspricht. Nach Abwickeln der zu bedruckenden Fläche 66 an der Siebdruckschablone 16 nimmt das Objekt 10 die unten dargestellte Lage ein, in der es gegenüber der Ausgangsposition um eine Wegstrecke nach links verschoben worden ist. Dies entspricht der Position in den Stationen II und IV der Fig. 1A.

Im Fall c) der Fig. 11 ist der Bewegungsablauf beim Bedrucken von flachen Objekten 10 dargestellt, die nicht an der Siebdruckschablone abgewälzt werden. Auch hier erfolgt jedoch eine Lateralverschiebung des Objektes 10 aus der Position am Druckanfang in die Position am Druckende. Wie im Falle b) nimmt das Objekt zu Beginn des Druckvorgangs oder anderer Behandlungsvorgänge, bei denen eine solche Lateralverschiebu ng ebenfalls erforderlich oder zweckmäßig ist, eine Position ein, die gegenüer der Mitte der jeweiligen Behandlungsstation seitlich etwas versetzt ist. Am Ende des Behandlungsvorganges nimmt das Objekt eine in Gegenrichtung gegenüber der Mitte der Station versetzte Position ein. Die beiden jeweils unteren Darstellungen in den Figuren 11A, 11B, 11C zeigen, daß im Bedarfsfall die Siebdruckschablone auch in entgegengesetzter Richtung verschoben werden kann, wobei die Bewegungsabläufe zwar umgekehrt erfolgen, ansonsten jedoch unverändert bleiben.

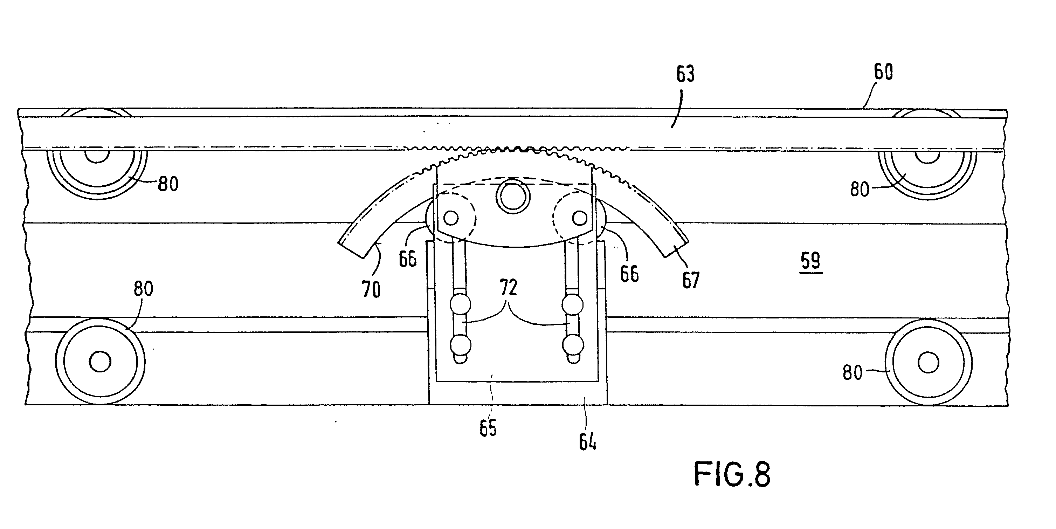

In den Fig. 7. und 8 ist die Anbringung der Halterungsteile 12a, 12b an der Halterungeinrichtung 12 für das Behandeln von im Querschnitt etwa elliptischen Objekten dargestellt. Jede der beiden in den Fig. 7 und 8 nicht dargestellten Halterungsleisten 14a, 14b ist mit einer stationären Führungsschiene 59 versehen, die einen Schlitten 60 trägt. letzterer ist mit Führungsrollen 62 versehen, mittels welcher der Schlitten 60 an der Führungsschiene 59 geführt ist. Am Schlitten ist eine längsverlaufende Zahnstange 63 angebracht. In den Stationen, in denen an den Objekten Behandlungen durchgeführt werden, ist der an jeder Führungsschiene 59 ein Sockel 64 befestigt, an welchem ein Trageelement höhenverstellbar angebracht ist. Zum Zwecke der leichten Einstellbarkeit ist das Tragelement 65 mit Langlöchern 72 versehen, durch die Schrauben in den Sockel 64 einschraubbar sind, um das Tragelement 65 in der jeweils gewünschten Lage an der Halterung 64 anzuklemmen.

Beim Dekorieren von Objekten, die einen etwa ovalen oder etwa elliptischen Querschnitt haben, bei dem somit der Mittelpunkt des Radius' der gekrümmten, zu bedruckenden Fläche nicht mit dem Mittelpunkt des Objektes zusammenfällt, trägt das Tragelement 65 zwei in einem lateralen Abstand voneinander angeordnete Führungsrollen 66, die einen gebogenen Zahnstangenabschnitt 67 tragen und führen. Die Zahnung des Zahnstangenabschnittes 67 befindet sich an dessen Oberseite. Das die Führungsrollen 66 tragende Tragelement 65 ist bezüglich seiner Höhenlage so eingestellt, daß die Führungsrollen 66 den Zahnstangenabschnitt in einer Position halten, in welcher seine oberseitig angebrachte Zahnung mit der unterseitig angebrachten Zahnung der Zahnstange 63 kämmt.

Der gekrümmte Zahnstangenabschnitt 67 trägt das jeweilige Halterungsteil 12a bzw. 12b. Die Verbindung zwischen Zahnstangenabschnitt 67 und Bodenhalterung 12a erfolgt über einen Bolzen 69, der senkrecht zur Bewegungsebene der Zahnstange 67 verläuft. Deren Krümmung ist so gewählt, daß der Verlauf der von ihr getragenen Zahnung dem Verlauf der zu dekorierenden Fläche des Objektes 10 entspricht.

Die in den Figuren 7 und 8 dargestellte Position der Teile entspricht deren Lage etwa nach dem Aufbringen des halben Dekors auf der zu dekorierenden Fläche, wobei unterstellt wird, daß das aufzubringende Dekor in Umfangsrichtung der zu dekorierenden Fläche symmetrisch auf diese aufgebracht wird.

Die untere, der Verzahnung abgekehrte Fläche jedes Zahnstangenabschnittes 67 ist glatt ausgeführt, so daß die beiden Führungsrollen 66, deren Mantelflächen ebenfalls glatt ausgeführt sind, an ihr abrollen können. Wesentlich ist, daß die untere Begrenzungsfläche 70 des Zahnstangenabschnittes 67 schräg verlaufend angeordnet ist derart, daß die Dicke der Zahnstange von vorne, also an ihrer der Bodenhalterung 12a zugekehrten Seite, nach hinten etwas zunimmt, die Zahnstange 67 somit im Querschnitt keilförmig begrenzt ist. Dies setzt zur Erzielung einer einwandfreien Führung durch die beiden Führungsrollen 66 voraus, daß deren Mantelflächen entsprechend geneigt verlaufen. Dies kann entweder durch eine emtsprechende konische Ausbildung der beiden Führungsrollen 66 oder aber durch eine entsprechende Schrägstellung derselben erreicht werden. Bei dem in der Zeichnung dargestellten Ausführungsbeispiel ist die zweite Möglichkeit gewählt worden, da diese die Verwendung üblicher Rollenkörper für die Führungsrolle 66 ermögl icht, die billiger sind als die konisch ausgebildeten Rollen. Durch die vorbeschriebene Ausgestaltung wird erreicht, daß die Zahnstangenabschnitte 67 ohne besondere, aufwendige Maßnahmen durch die zugehörigen Führungsrollen 66 in ihrer jeweiligen Lage formschlüssig gehalten werden, so daßdie Zahnstangenabschnitte 67 aus ihrer in Fig. 7 dargestellten jeweiligen Position nach vorne, also in Richtung auf das Objekt 10 nicht herausgezogen werden können. An der anderen Seite liegt jeder Zahnstangenabschnitt 67 am jeweils zugehörigen Schlitten 60 an, so daß er somit auf einfache Weise gegen Verschieben in beiden Richtungen quer zu seiner Längsachse gesichert ist. Darüber hinaus bewirkt die untere, schräge Begrenzungs- und Führungsfläche 70 im Zusammenwirken mit den Führungsrollen 66 das Enstehen einer Kraftkomponente, die den Zahnstangenabschnitt 67 in Richtung auf sein Widerlager am Schlitten 60 zu bewegen sucht.

Zur Durchführung einer Behandlung, bei welcher das Objekt 10 um den Abwickelmittelpunkt verschwenkt werden muß, werden die Zahnstangenabschnitte 67 zunächst durch eine entsprechende Längsverschiebung der zugehörigen Zahnstange 63 in die Ausgangslage für den Behandlungsvorgang verschoben, wobei das Halterungsteil 12a, da es über den Bolzen 69 mit dem Zahnstangenabschnitt 67 fest verbunden ist, entsprechend lateral verschoben und dabei gleichzeitig verschwenkt wird. Somit nimmt die Halterung 12a, 12b in der Aufnahmeposition die in Fig. 1B in den Stationen II, IV und VI dargestellte Lage ein, die der Lage des Querschnitts des von der Halterung 12a, 12b aufzunehmenden Objektes 10 entspricht. Durch Gegeneinanderbewegen der beiden Halterungsteile 12a, 12b wird das Objekt zwischen beiden Halterungsteilen eingespannt und vom Greifer, der das Objekt in die entsprechende Lage gebracht und bis dahin gehalten hatte, freigegeben. Nunmehr erfolgt der Behandlungsvorgang. Dazu werden die Zahnstangen 63 um eine Wegstrecke verschoben, deren Länge sich z. B. aus der Abmessung des aufzubringenden Dekors in Umfangsrichtung des zu dekorierenden Objektes ergibt. Durch die Längsverschiebung der Zahnstangen 63werden auch die Zahnstangenabschnitte 67 verschwenkt, wobei das Objekt 10 aufgrund der vorbeschriebenen Anordnung mit den Zahnstangenabschnitten 67 eine entsprechende Schwenkbewegung ausführt, die auch eine horizontale, also laterale Komponente, enthält. Während dieser Schwenkbewegung kann z. B. Dekor auf dem Objekt 10 aufgebracht werden. Am Ende dieser Bewegung nehmen Halterung 12a, 12b und das darin befindliche Objekt 10 die in Fig. 1A, Stationen II, IV und VI dargestellte Lage ein, in welcher das Objekt in der bereits beschriebenen Weise vom Greifer 18 erfaßt wird, so daß es, nachdem die beiden Halterungsteile 12a, 12b auseinandergefahren worden sind und das Objekt somit freigegeben haben, der Greifer das Objekt zur folgenden Station transportieren kann. Die Halterung 12a, 12b kann dann wieder in die Ausgangslage zur Aufnahme des nächsten Objektes zurückbewegt werden.

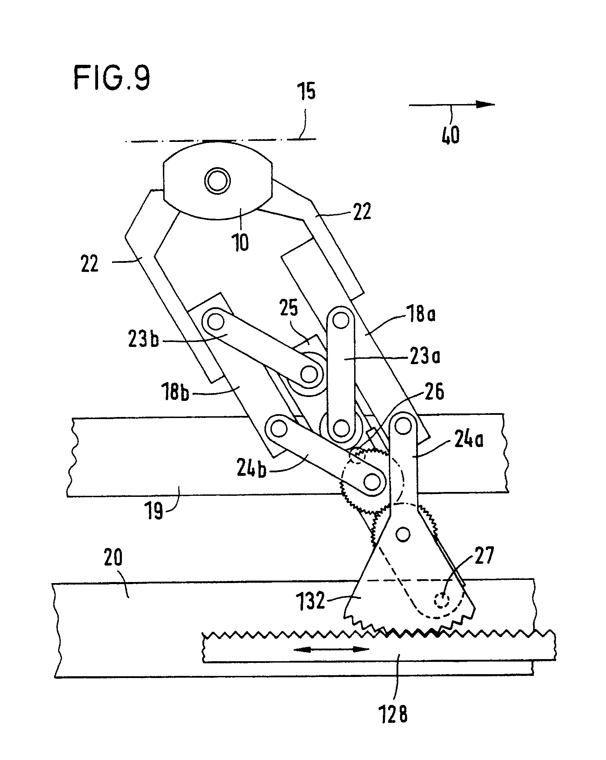

In Fig. 9 ist ein Greifer 18 dargestellt, bei welchem anstelle einer Gabel 32 und eines Bolzens 33 an der zweiten Steuerleiste 28 ein Zahnsegment 132 vorgesehen ist, welches mit einer Zahnstange 128 kämmt, die die Funktion der zweiten Steuerleiste hat. Im übrigen besteht Übereinstimmung mit dem in Fig. 5 der Zeichnung dargestellten Greifer.

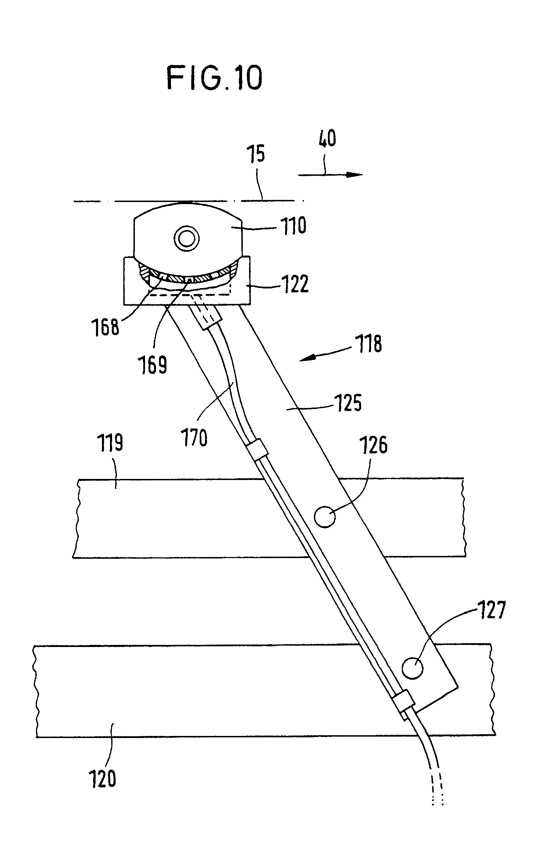

Fig. 10 zeigt ein Tragelement 118, welches als Vakuumhalter ausgebildet ist. Letzterer besteht im wesentlichen aus einem langgestreckten Stützkörper 125, der schwenkbar an einem Balken 119 angebracht ist. An seinem der Halterungseinrichtung zugekehrten Ende ist der Stützkörper 125 mit einer Aufnahme 122 versehen, deren der Siebebene 15 zugekehrte Seite durch ein Wandteil 168 begrenzt ist, dessen Querschnittsform der Form des zu transportierenden Objektes 110 angepaßt ist. Das Wandteil 168 ist mit Durchbrechungen 169 versehen, die über eine Schlauchleitung 170 an eine Unterdruckquelle anschließbar sind. Die Verbindung zwischen Stützkörper 125 und Balken 119 erfolgt wie bei den Greifern über einen Bolzen 126. Die Verbindung mit der auch hier erforderlichen Steuerleiste 120 erfolgt über einen Bolzen 127. Die bei Verwendung der Greifer vorgesehene zweite Steuerleiste entfällt, da anstelle des Öffnens und Schließens der Greifer bei der Ausführungsform gemäß Fig. 10 ein Abschalten und Einschaltens des das Objekt 110 in seiner Position haltenden Unterdrucks über die Leitung 170 erfolgt. Im übrigen treten auch bei der Ausführungsform gemäß Fig. 10 die Wirkungen ein, die im Zusammenhang mit dem Greifer beschrieben worden sind.

Abweichend von der Darstellung in der Zeichnung ist es auch ohne weiteres möglich, die Objekte stehend zu bedrucken, zu etikettieren oder sonstwie zu behandeln. Es wäre dann lediglich erforderlich, die Halterungen 12a, 12b in einer vertikalen oder - falls erforderlich einer anderen Ebene - anzuordnen und die Behandlungsstationen seitlich daneben zu positionieren. Balken 19 und Tragelemente 18 werden kann in einer horizontalen - oder einer schräg verlaufenden Ebene entsprechender Position der Objekte - ihre Schwenkbewegungen ausführen.

Die Erfindung ist bezüglich ihrer Anwendbarkeit auch nicht auf Druckmaschinen, insbesondere Siebdruckmaschinen, beschränkt. Vielmehr ist sie überall dort anwendbar, wo Objekte zum Zwecke des Dekorierens und dazugehörender anderer Behandlungsvorgänge in der vorbeschriebenen Weise transportiert und bezüglich ihres Bewegungsablaufs gehandhabt werden können.

## Patentansprüche

1. Vorrichtung zum schrittweisen Transportieren und Positionieren von Objekten, mit einer ersten Station, wenigstens einer zweiten Station, einer Halterungseinrichtung (12), von welcher die Einzelobjekte (10) jeweils in den Stationen getragen werden, wenigstens einer Station mit wenigstens einer Einrichtung zum Aufbringen einer Dekoration und mit einer die Objekte ergreifenden, einen hin- und hergehenden Hub ausführender Transporteinrichtung, durch die Objekte absatzweise von einer Station zu einer in Transportrichtung (40) davon in einem Abstand befindlichen anderen Station vorbewegbar sind, dadurch gekennzeichnet, daß die Halterungseinrichtung aus paarweise am Einzelobjekt angreifenden parallel zur Längsachse des Objekts hin- und her-, sowie aufeinanderzubewegbaren Halterungselementen (l2a, l2b) besteht und daß die Transporteinrichtung wenigstens einen Grundkörper (19) aufweist, der in einer Ebene, die im wesentlichen senkrecht zur Längsachse der von den Halterungselementen (12a, 12b) getragenen Objekte (10) verläuft, hin- und herschwenkbar angeordnet und mit wenigstens einem während des Transports das Einzelobjekt aufnehmenden Tragelement (18) versehen ist, das vom Grundkörper (19) in Richtung auf die Halterungseinrichtung (12) vorstehend und in der Schwenkebene des Grundkörpers (19) an diesem schwenkbar angelenkt ist, und die Schwenkbewegung des Grundkörpers (19) und die des Tragelementes (18) sich zu einer Wegstrecke ergänzen, um welche das Objekt von einer ersten Station, in welcher es von einer Halterung (12a, 12b) der Halterungseinrichtung getragen wird, zu einer von der ersten Station in einem Abstand befindlichen zweiten Station vorbewegt wird, in welcher es von einer anderen Halterung (12a, 12b) getragen wird, und dem Grundkörper (19) wenigstens ein Steuerelement (20) zugeordnet ist, das mit dem wenigstens einen Tragelement (18) auf eine dessen Schwenkbewegung ermöglichende Weise verbunden ist und gegenüber dem Grundkörper (19) derart verschiebbar gelagert ist, daß die Schwenkbewegungen der Tragelemente (18) in Abhängigkeit von den Schwenkbewegungen des Grundkörpers (19) steuerbar sind.

2. Vorrichtung nach Anspruch 1, dadurch gekennzeichnet, daß die vom Grundkörper (19) ausgeführte Schwenkbewegung einstellbar ist.

3. Vorrichtung nach Anspruch 1, dadurch gekennzeichnet, daß die vom Tragelement (18) ausgeführte Schwenkbewegung einstellbar ist.

4. Vorrichtung nach Anspruch 1, dadurch gekennzeichnet, daß der Grundkörper (19) der Transporteinrichtung wenigstens zwei in Längsrichtung des Grundkörpers (19) einen Abstand voneinander aufweisende Tragelemente (18) trägt und der Abstand zwischen zwei aufeinanderfolgenden Tragelementen (18) an den Abstand zwischen zwei Halterungen (12a, 12b) der Halterungseinrichtung angepaßt ist, zwischen denen das Objekt (10) in einem Transportschritt vorzubewegen ist.

5. Vorrichtung nach Anspruch 1, dadurch gekennzeichnet, daß das Tragelement (18) das Objekt (10) am Ende eines Transportschrittes in einer Position an die Halterung (12a, 12b) in einer Station übergibt, welche der Position des Objektes zu Beginn der diesem Transportschritt folgenden Behandlungsmaßnahme entspricht, während welcher das Objekt von einer Halterung (12a, 12b) getragen wird.

6. Vorrichtung nach Anspruch 1, dadurch gekennzeichnet, daß das Tragelement (18) vor Beginn eines Transportschrittes das Objekt (10) in einer Position aus der Halterung (12a, 12b) übernimmt, welche der Position des Objektes am Ende der diesem Transportschritt vorangegangenen Behandlungsmaßnahme entspricht, während welcher das Objekt von einer Halterung (12a, 12b) getragen wird.

7. Vorrichtung nach Anspruch 1 dadurch gekennzeichnet, daß der Grundkörper der Transporteinrichtung als Balken (19) ausgebildet ist.

8. Vorrichtung nach Anspruch 1, dadurch gekennzeichnet, daß das Haltemittel (18) als Greifer ausgebildet ist.

9. Vorrichtung nach Anspruch 1, dadurch gekennzeichnet, daß das Haltemittel (18) als Vakuumhalter ausgebildet ist.

10. Vorrichtung nach Anspruch 1, dadurch gekennzeichnet daß das Steuerelement zum Steuern der Schwenkbewegung des Tragelementes (18) als Leiste (20) ausgebildet ist.

11. Vorrichtung nach Anspruch 10, dadurch gekennzeichnet, daß die Leiste (20) an der der Halterungseinrichtung (12) abgekehrten Seite des Grundkörpers (19) der Transporteinrichtung angeordnet ist.

12. Vorrichtung nach Anspruch 11, dadurch gekennzeichnet, daß sämtliche durch die Steuerleiste (20) zu steuernden Haltemittel (18) an ihrer der Halterungseinrichtung abgekehrten Seite mit einem Fortsatz versehen sind, der schwenkbar mit der Leiste (20) verbunden ist, die mit wenigstens einer Steuerstange (46) verbunden ist, die schwenkbar und längsverschiebbar am Maschinenrahmen gelagert ist.

13. Vorrichtung nach den Ansprüchen 1 und 10, dadurch gekennzeichnet, daß der Greifer (18) mit einem die beiden Greiferbacken (22a, 22b) tragenden Stützkörper (25) versehen ist, der am zugeordneten Grundkörper (19) der Transporteinrichtung in einer zu dessen Bewegungsebene parallelen Ebene schwenkbar angebracht und mit seinem dem zu transportierenden Artikel abgekehrten Ende an der ersten Steuerleiste (20) dieser gegenüber schwenkbar angebracht ist, und zwei miteinander kämmende Zahnräder (35, 36) trägt, von denen jeweils eines einer der beiden Greiferbacken (22a, 22b) zugeordnet ist, und ein zweiarmiger Hebel (24a, 31), der mit der eines der beiden Zahnräder tragenden Welle (30) drehfest verbunden ist, mit einem Arm (31) schwenkbar mit einer zweiten Steuerleiste (28) und mit dem anderen Arm (24a) mit einer der beiden Greiferbacken (22a) verbunden ist und das zweite Zahnrad (36) über einen Arm (24b), der mit der das zweite Zahnrad (36) tragenden Welle (37) drehfest verbunden ist, mit der zweiten Greiferbacke (22b) schwenkbar verbunden ist.

14. Vorrichtung nach Anspruch 13, dadurch gekennzeichnet, daß das den Greiferbacken (22a, b) abgekehrte Ende des gelenkig mit der zweiten Steuerleiste (28) verbundenen Arms (31) gabelartig ausgebildet und ein an der zweiten Steuerleiste (28) angeordnetes Mitnehmerteil in die Gabel (32) eingreift.

15. Vorrichtung nach Anspruch 1, dadurch gekennzeichnet, daß der Grundkörper (19) entlang einer kurvenförmigen Bahn hin- und herbewegt wird, deren Scheitelpunkt der am weitesten von der Ebene, in welcher die Halterungen (12a, 12b) angeordnet sind, entfernte Punkt der Bahn ist und die Schwenkbewegung der Tragelemente (18) während des Transporthubs an die Bewegung des Grundkörpers (19) derart angepaßt ist, daß die Lageänderung der Tragelemente (18) an die Schwenkbewegung des Grundkörpers (19) derart angepaßt ist, daß die Lageänderung der Tragelemente (18) senkrecht zur Ebene der Halterungen (12a, b) während der Schwenkbewegung durch eine entgegengesetzte Lageänderung des Grundkörpers (19) zumindest teilweise kompensiert wird.

16. Vorrichtung nach Anspruch 1, dadurch gekennzeichnet, daß die Halterungseinrichtung für die Objekte (10) zwei im wesentlichen parallel zu den die Tragelemente (18) tragenden Grundkörper (19) verlaufende Halterungsleisten (14a, 14b) aufweist, an deren einander zugekehrten Seiten die Halterungsteile (12a, 12b) angeordnet sind.

17. Vorrichtung nach Anspruch 15, dadurch gekennzeichnet, daß die Halterungsleisten oberhalb des die Tragelemente (18) tragenden Grundkörpers (19) angeordnet sind.

18. Vorrichtung nach Anspruch 1, dadurch gekennzeichnet, daß wenigstens ein Teil der die Objekte (10) tragenden Halterungsteile (12a, 12b) unter Zwischenschaltung eines Schlittens an den Halterungsleisten (14a, 14b) angebracht sind.

## Claims

1. Apparatus for the stepwise transportation and positioning of objects, comprising a first station, at least one second station, a holding device (12) by which the individual objects (10) are respectively carried in the stations, at least one station with at least one means for applying a decoration and with a transportation means which engages the objects and which performs a reciprocating stroke movement and by which the objects can be advanced in a batch-wise manner from one station to another station disposed at a spacing therefrom in the transportation direction (40), characterised in that the holding device comprises holding elements (12a, 12b) which engage the individual object as a pair and which are movable towards each other and with a reciprocating movement parallel to the longitudinal axis of the object, and that the transportation means comprises at least one main body (19) which is arranged to be pivotable with a reiprocating movement in a plane which extends substantially perpendicular to the longitudinal axis of the objects (10) carried by the holding elements (12a, 12b), and is provided with at least one carrier element (18) which receives the individual object during the transportation operation and which is connected to the main body (19) in such a way as to project therefrom towards the holding device (12) and pivotably in the plane of pivotal movement of the main body (19) and the pivotal movement of the main body (19) and that of the carrier element (18) supplement each other to provide a travel path over which the object is advanced from a first station in which it is carried by a holding element (12a, 12b) of the holding device to a second station which is disposed at a spacing from the first station and in which it is carried by another holding element (12a, 12b), and associated with the main body (19) is at least one control element (20) which is connected to the at least one carrier element (18) in a manner such as to permit the pivotal movement thereof, and is mounted displaceably relative to the main body (19) in such a way that the pivotal movements of the carrier elements (18) are controllable in dependence on the pivotal movements of the main body (19).

2. Apparatus according to claim 1 characterised in that the pivotal movement performed by the main body (19) is adjustable.

3. Apparatus according to claim 1 characterised in that the pivotal movement performed by the carrier element (18) is adjustable.

4. Apparatus according to claim 1 characterised in that the main body (19) of the transportation means carries at least two carrier elements (18) which are disposed at a spacing from each other in the longitudinal direction of the main body (19) and the spacing between two successive carrier elements (18) is adapted to the spacing between two holding elements (12a, 12b) of the holding device, between which the object (10) is to be advanced in a transportation step.

5. Apparatus according to claim 1 characterised in that the carrier element (18), at the end of a transportation step, transfers the object (10) to the holding element (12, 12b) in a station, in a position which corresponds to the position of the object at the beginning of the treatment operation which follows said transportation step and during which the object is carried by a holding element (12a, 12b).

6. Apparatus according to claim 1 characterised in that the carrier element (18), before the beginning of a transportation step, takes the object (10) from the holding element (12a, 12b) in a position which corresponds to the position of the object at the end of the treatment operation which precedes said transportation step and during which the object is carried by a holding element (12a, 12b).

7. Apparatus according to claim 1 characterised in that the main body of the transportation means is in the form of a beam (19).

8. Apparatus according to claim 1 characterised in that the holding means (18) is in the form of a gripper.

9. Apparatus according to claim 1 characterised in that the holding means (18) is in the form of a vacuum holder.

10. Apparatus according to claim 1 characterised in that the control element for controlling the pivotal movement of the carrier element (18) is in the form of a bar (20).

11. Apparatus according to claim 10 characterised in that the bar (20) is arranged at the side of the main body (19) of the transportation means, which is remote from the holding means (12).

12. Apparatus according to claim 11 characterised in that all holding means (18) to be controlled by the control bar (20) are provided at their side remote from the holding means with an extension which is pivotably connected to the bar (20) which is connected to at least one control rod (46) which is mounted on the machine frame pivotably and longitudinally slidably.

13. Apparatus according to claims 1 and 10 characterised in that the gripper (18) is provided with a support body (25) which carries the two gripper jaws (22a, 22b) and which is mounted to the associated main body (19) of the transportation means pivotably in a plane parallel to the plane of movement thereof and with its end remote from the article to be transported is mounted to the first control bar (20) pivotably relative thereto, and carries two mutually meshing gears (35, 36), each of which is associated with a respective one of the two gripper jaws (22a, 22b), and a double-armed lever (24a, 31) which is non-rotatably connected to the shaft (30) carrying one of the two gears is connected by one arm (31) pivotably to a second control bar (28) and by the other arm (24a) to one of the two gripper jaws (22a) and the second gear (36) is pivotably connected to the second gripper jaw (22b) by way of an arm (24b) which is non-rotatably connected to the shaft (37) carrying the second gear (36).

14. Apparatus according to claim 13 characterised in that the end, which is remote from the gripper jaws (22a, 22b), of the arm (31) which is pivotably connected to the second control bar (28) is of a forked configuration, and an entrainment portion arranged on the second control bar (28) engages into the fork (32).

15. Apparatus according to claim 1 characterised in that the main body (19) reciprocates along a curved path whose apex is the point on the path which is furthest away from the plane in which the holding elements (12a, 12b) are arranged, and the pivotal movement of the carrier elements (18) during the transportation stroke movement is adapted to the movement of the main body (19) in such a way that the change in position of the carrier elements (18) is adapted to the pivotal movement of the main body (19) in such a way that the change in position of the carrier elements (18) perpendicularly to the plane of the holding elements (12a, 12b) during the pivotal movement is at least partially compensated by an opposite change in the position of the main body (19).

16. Apparatus according to claim 1 characterised in that the holding device for the objects (10) comprises two holding bars (14a, 14b) which extend substantially parallel to the main body (19) carrying the carrier elements (18), the holding members (12a, 12b) being arranged at the mutually facing sides of the holding bars.

17. Apparatus according to claim 15 characterised in that the holding bars are arranged above the main body (19) which carries the carrier elements (18).

18. Apparatus according to claim 1 characterised in that at least a part of the holding members (12a, 12b) which carry the objects (10) are mounted to the holding bars (14a, 14b) with the interposition of a carriage.

## Revendications

1. Dispositif pour transporter pas à pas et positionner des objets, comportant un premier poste de traitement, au moins un second poste, un système de maintien (12) pour porter séparément chaque objet (10) à l'endroit de chacun des postes, dont l'un au moins est pourvu d'au moins un système pour appliquer un motif de décoration, et un système de transport prévu pour saisir les objets et pour effectuer un mouvement de va-et-vient qui permet de faire avancer les objets par déplacements successifs d'un poste à un autre poste situé à une certaine distance du premier dans le sens du transport (40), caractérisé en ce que le système de maintien comporte des organes de maintien (12a, 12b) associés par paires pour saisir chaque objet, les organes de maintien de chaque paire pouvant à cet effet s'écarter l'un de l'autre dans un sens parallèle à l'axe longitudinal de l'objet ou se rapprocher l'un de l'autre pour saisir l'objet, et en ce que le système de transport comporte un bloc support (19) qui peut osciller dans un plan sensiblement perpendiculaire à l'axe des objets (10) portés par les organes de maintien (12a,12b), et au moins un organe porteur (18) prévu pour recevoir chaque objet pendant le transport de celui-ci, cet organe porteur étant monté en saillie sur le bloc support (19) en direction du système de maintien (12) et articulé sur le bloc support (19) pour pouvoir osciller dans le plan du mouvement alterné de ce bloc, le mouvement alterné du bloc support (19) et celui de l'organe porteur (18) se complétant pour réaliser un trajet élémentaire de transport de l'objet (10), qui se trouve ainsi enlevé d'un premier poste où il est porté par une paire d'organes de maintien (12a,12b), pour être amené à un second poste situé à une certaine distance du premier où l'objet est pris par une autre paire d'organes de maintien (12a,12b), et au moins un organe d'actionnement (20) associé à chaque bloc support (19) et relié à au moins un organe porteur (18) de manière à permettre le mouvement oscillant de cet organe, tout en étant monté à coulisse par rapport au bloc support (19), pour commander les mouvements oscillants des organes porteurs (18) suivant les mouvements alternés du bloc support (19).

2. Dispositif selon la revendication 1, caractérisé en ce que le mouvement oscillant du bloc support (19) est réglable.

3. Dispositif selon la revendication 1, caractérisé en ce que le mouvement oscillant de l'organe porteur (18) est réglable.

4. Dispositif selon la revendication 1, caractérisé en ce que le bloc support (19) du système de transport porte au moins deux organes porteurs (18) écartés l'un de l'autre dans le sens de la longueur du bloc support (19), cet écartement entre deux organes porteurs successifs (18) correspondant à l'écartement entre deux paires d'organes de maintien (12a,12b) entre lesquelles il s'agit de faire avancer l'objet (10) dans une opération élémentaire de transport.

5. Dispositif selon la revendication 1, caractérisé en ce que l'organe porteur (18) est prévu pour abandonner l'objet (10) à la fin d'une opération élémentaire de transport en regard des organes de maintien (12a,12b) d'un poste de traitement, dans une position qui correspond à celle du même objet au début de l'opération de traitement à effectuer ensuite sur l'objet maintenu pendant cette opération par une paire d'organes de maintien (12a,12b).

6. Dispositif selon la revendication 1, caractérisé en ce que l'organe porteur (18) intervient avant le début d'une opération élémentaire de transport, pour reprendre l'objet (10) en l'enlevant d'une paire d'organes de maintien (12a,12b) dans une position qui correspond à celle de l'objet à la fin de l'opération de traitement qui précède cette opération élémentaire de transport, et pendant laquelle l'objet était maintenu par la paire d'organes de maintien (12a,12b).

7. Dispositif selon la revendication 1, caractérisé en ce que le bloc support du système de transport est constitué par une poutre (19).

8. Dispositif selon la revendication 1, caractérisé en ce que l'organe porteur (18) est constitué par un organe de préhension.

9. Dispositif selon la revendication 1, caractérisé en ce que l'organe porteur (18) est constitué par un organe porteur à dépression.

10. Dispositif selon la revendication 1, caractérisé en ce que l'organe de commande du mouvement oscillant de l'organe porteur (18) est constitué par une barre d'actionnement (20).

11. Dispositif selon la revendication 10, caractérisé en ce que la barre d'actionnement (20) est disposée du côté du bloc support (19) du système de transport qui est à l'opposé du système de maintien (12).

12. Dispositif selon la revendication 11, caractérisé en ce que tous les organes porteurs (18) commandés par la barre d'actionnement (20) comportent, du côté opposé au système de maintien (12), un appendice relié par une articulation à la barre d'actionnement (20), celle-ci étant reliée à au moins une tige de commande (46) montée dans un coulisseau qui pivote sur le bâti de la machine.

13. Dispositif selon les revendications 1 et 10, caractérisé en ce que chaque organe de préhension (18) comporte un corps (25) qui porte les deux mâchoires de serrage (22a,22b), et qui est associé au bloc support (19) du système de transport par une articulation lui permettant d'osciller dans un plan parallèle au déplacement de ce bloc, l'extrémité du corps (25) opposée à l'objet (10) à transporter étant associée par une autre articulation à la première barre d'actionnement (20), et portant deux roues dentées (35,36) en prise l'une avec l'autre et associées chacune à l'une des deux mâchoires de serrage (22a,22b), cette extrémité du corps portant en outre un levier à deux branches (24a,31) solidaire en rotation de l'arbre (30) qui porte l'une des deux roues dentées, l'une des branches (31) de ce levier étant articulée sur une deuxième barre d'actionnement (28), alors que l'autre branche (24a) du levier est reliée à l'une des deux mâchoires de serrage (22b), la deuxième roue dentée (36) étant reliée à l'autre mâchoire de serrage (22a) par l'intermédiaire d'une biellette (24b) articulée sur cette branche et solidaire en rotation de l'arbre (37) qui porte la deuxième roue dentée (36).

14. Dispositif selon la revendication 13, caractérisé en ce que l'extrémité de la branche (31) opposée aux mâchoires de serrage (22a,22b) et articulée sur la deuxième barre d'actionnement (28) est en forme de fourche, un organe d'entraînement solidaire de la deuxième barre d'actionnement (28) étant engagé dans cette fourche (32).

15. Dispositif selon la revendication 1, caractérisé en ce que le bloc support (19) est animé d'un mouvement de va-et-vient suivant un trajet curviligne, dont le sommet correspond à un écartement maximum par rapport au plan où sont situés les organes de maintien (12a, 12b), et en ce que le mouvement oscillant des organes porteurs (18) pendant un trajet élémentaire de transport est adapté au mouvement du bloc support (19), de telle manière que le changement de position des organes porteurs (18) se trouve adapté au mouvement oscillant du bloc support (19), pour que le changement de position des organes porteurs (18), dans un sens transversal au plan des organes de maintien (12a, 12b) pendant ce mouvement oscillant, soit au moins en partie compensé par un changement de position du bloc support (19) en sens opposé.

16. Dispositif selon la revendication 1, caractérisé en ce que le système de maintien prévu pour porter les objets (10) comporte deux barres de maintien (14a,14b) sensiblement parallèles au bloc support (19) qui porte les organes porteurs (18), les pièces de maintien (12a,12b) étant montées sur les côtés de ces barres (14a,14b) qui sont en regard l'un de l'autre.

17. Dispositif selon la revendication 15, caractérisé en ce que les barres de maintien sont placées au-dessus du bloc support (19) qui porte les organes porteurs (18).

18. Dispositif selon la revendication 1, caractérisé en ce qu'au moins une partie des organes de maintien (12a,12b) qui portent les objets (10) sont associés aux barres de maintien (14a,14b) par l'intermédiaire d'un chariot.

FIG.1 A

FIG.1 B

EP 0 266 645 B1

FIG.2

# FIG.3 A

# FIG.3B

# FIG.3C

FIG.4

FIG.5

FIG.6

FIG.7

FIG.8

EP 0 266 645 B1

FIG.9

EP 0 266 645 B1

# FIG.10

26

FIG.11 a                    b )                    c )

DRUCKANFANG
Sieblaufrichtung

DRUCKENDE
Sieblaufrichtung

DRUCKANFANG
Sieblaufrichtung

DRUCKENDE
Sieblaufrichtung

EP 0 266 645 B1